# EUROPEAN PATENT SPECIFICATION

(11) **EP 4 524 182 B1**
(45) Date of publication and mention of the grant of the patent: **21.10.2026**
(21) Application number: 23306532.5
(22) Date of filing: 15.09.2023
(51) Int. Cl.: C08J 3/24, C08K 5/55, C08F 8/42

(54) **BORONIC ESTER-BASED CROSSLINKED POLYMERS WITH IMPROVED PROCESSABILITY**
AUF BORONSÄUREESTER BASIERENDE VERNETZTE POLYMERE MIT VERBESSERTER VERARBEITBARKEIT
POLYMÈRES RÉTICULÉS À BASE D'ESTER BORONIQUE AYANT UNE APTITUDE AU TRAITEMENT AMÉLIORÉE

(43) Date of publication of application: 19.03.2025
(73) Proprietor: Ecole Supérieure de Physique et de Chimie Industrielles de la Ville de Paris, 75005 Paris (FR); Centre National de la Recherche Scientifique (CNRS), 75016 Paris (FR)
(72) Inventor: NICOLAY, Renaud, 91370 VERRIERES-LE-BUISSON (FR); VAN ZEE, Nathan Jay, 94200 IVRY-SUR-SEINE (FR); FORMON, Georges Jacques Marie, 1610 ORON-LA-VILLE (CH); JAYARATNAM, Jonathan, 78700 CONFLANS-SAINTE-HONORINE (FR)
(74) Representative: Regimbeau

(56) References cited:
- WO-A1-2017/029412
- YANG YUE ET AL: "Thermally healable and reprocessable polymethacrylate networks based on diol-mediated metathesis of 6-membered boronic esters", POLYMER CHEMISTRY, vol. 11, no. 11, 25 February 2020 (2020-02-25), Cambridge, pages 1860 - 1870, XP093132779, ISSN: 1759-9954, DOI: 10.1039/C9PY01546A
- R�TTGER MAX ET AL: "High-performance vitrimers from commodity thermoplastics through dioxaborolane metathesis", vol. 356, no. 6333, 7 April 2017 (2017-04-07), US, pages 62 - 65, XP093097632, ISSN: 0036-8075, Retrieved from the Internet <URL:https://users.ugent.be/~ivdbaere/ftp/literature/Rottger%20Science%202017.pdf> DOI: 10.1126/science.aah5281

## Description

### FIELD OF THE INVENTION

The present invention relates to a process for preparing crosslinked polymers, in particular vitrimers, with improved processability.

### BACKGROUND OF THE INVENTION

Like thermoset polymers, vitrimers have crosslinked structure that gives them advantageous mechanical properties, but they have the ability to flow at high temperature and can therefore be recycled, as thermoplastic polymer.

In the inventions described in the applications WO2017/029413 and WO2017/029412, vitrimers comprising exchangeable boronic ester links have been developed. As fully explained in WO2017/029413 and WO2017/029412, in particular on pages 2 to 4 of WO2017/029413, the metathesis reaction of the boronic esters enables an exchange reaction between the substituents on the boronic ester rings and can be represented as follows:

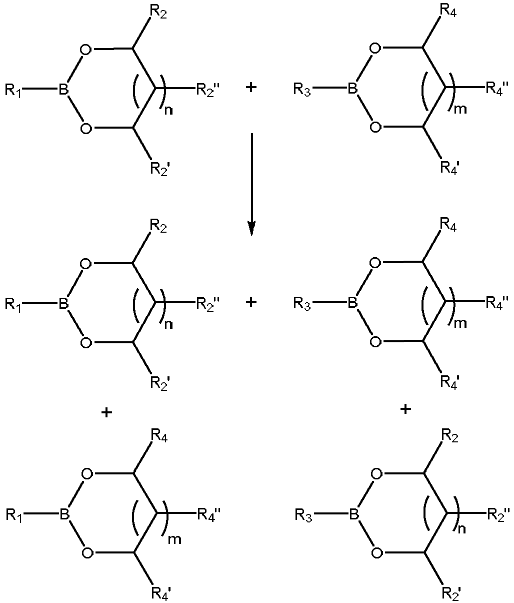

Crosslinked polymers, such as vitrimers, are useful for preparing recyclable materials, that can be heated to temperatures at which they become liquid without suffering destruction or degradation of their structure. However, the melt viscosity of such crosslinked polymers may decrease slowly with temperature and thus require higher temperatures and/or shear forces and/or processing time, as compared to thermoplastics. There is thus a need for a process allowing to improve the processability of crosslinked polymers, in particular of vitrimers.

### SUMMARY OF THE INVENTION

Surprisingly, the inventors of the present invention have developed a process for preparing crosslinked polymers in which the crosslinking is achieved via a post-processing curing step. Such an approach enables to process a polymer as a thermoplastic, that is easier to shape, optionally to store and to transport, and then to turn it into a crosslinked polymer, in particular a vitrimer, having exchangeable links in a later stage, at a suitable moment for use. This process implements an additive as crosslinking agent that melts, and thus crosslinks, in the polymer matrix at a temperature, called temperature of dissociation, higher that the processing temperature. Said temperature of dissociation is reached in the later curing step only.

The present invention relates to a process for preparing a crosslinked polymer composition containing exchangeable pending links and exchangeable crosslinks, by boronic ester metathesis reactions, comprising the steps of:
(a) heating, to a temperature Tₘᵢₓ, a mix M comprising:
   - a thermoplastic polymer, the thermoplastic polymer comprising pending boronic ester groups independently selected in the group consisting of dioxaborolane and dioxaborinane of the following formula EB-1 and EB-2, 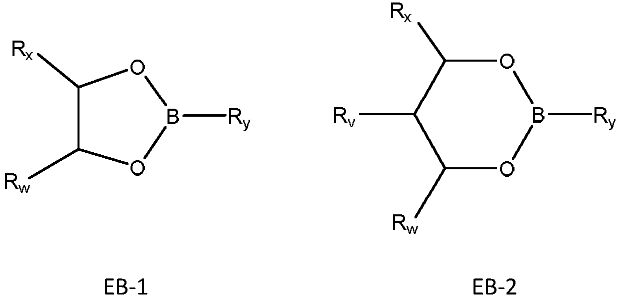 in which
      Rx, Rv and Rw are identical or different and each represent a hydrogen atom or a group comprising carbon or form together, as a pair, an aliphatic or an aromatic ring,
      Ry is a group comprising carbon, Ry being linked to the boron atom of the dioxaborolane or dioxaborinane ring by a covalent bond through a carbon atom;
         o Ry being further linked to the polymer directly by a covalent bond or through a functional group G covalently linked to the polymer; or
         o the substituent selected from Rx, Rw, Rv, {Rx, Rw} or {Rx, Rv} being linked to the polymer by a covalent bond or through a functional group G covalently linked to the polymer,
   - molecules of an additive A able to react with the pending boronic ester groups of the thermoplastic polymer to form a crosslinked polymer composition containing pending links and crosslinks that are exchangeable by boronic ester metathesis reaction and able to form intermolecular non-covalent interactions with other molecules of additive A and/or with the thermoplastic polymer so that at a temperature Tₘᵢₓ the molecules of additive A are associated together and/or with the thermoplastic polymer by non-covalent interactions, each molecule of additive A independently comprising:
      - two boronic ester functions able to react with the pending boronic ester groups of the thermoplastic polymer, and
      - two or more functions F, identical or different, selected in the group consisting of an amide function of formula -NH-C(O)-, a urea function of formula -NH-C(O)-NH-, and a carbamate function of formula -O-C(O)-NH-,
      wherein Tₘᵢₓ is higher than the glass transition temperature or the melting temperature of the thermoplastic polymer used in step (a) and equal to or lower than the initial temperature of dissociation T_{dis(i)} of the crosslinking agent (additive A) in the mix of step (a),
(b) recovering a composition comprising the polymer of step (a), which is not crosslinked, and the additive A, and,
(c) curing the non-crosslinked composition of step (b) at a temperature T_{c} to provide the crosslinked polymer composition,
   wherein T_{c} satisfies the following : ${T}_{c} \geq \left({T}_{dis \left(i\right)}+{T}_{dis \left(f\right)}\right) / 2 ,$ where T_{dis(i)} is the initial temperature of dissociation in step (a) and T_{dis(f)} is the final temperature of dissociation of the additive A in the mix of step (c),
   the initial temperature of dissociation T_{dis(i)} is the temperature at which the intermolecular non-covalent interactions formed by the molecules of additive A in the mix of step (a) start to break, and
   the final temperature of dissociation T_{dis(f)} is the temperature at which the intermolecular non-covalent interactions formed by the molecules of additive A in the mix of step (c) are completely broken.

According to some embodiments, each molecule of additive A comprises two identical boronic ester functions.

According to some embodiments, the molecules of additive A are identical and are of formula (IA) : 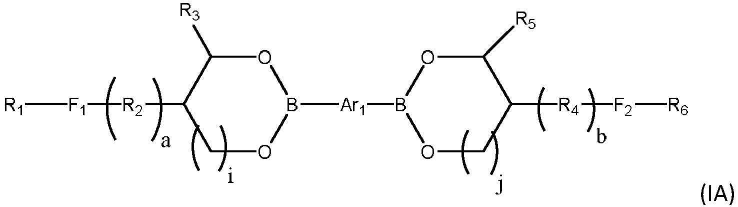 in which
Ar₁ is an aromatic group; F₁ and F₂, identical or different, are selected in the group consisting of -NH-C(O)-, -C(O)-NH-, -NH-C(O)-NH-, -O-C(O)-NH- and -NH-C(O)-O-;
a, b, i and j, identical or different, are natural integers equal to 0 or 1;
when a is 1:
   - R₂ is a C₁-C₄ alkanediyl or a C₁-C₄ alkenediyl, said alkanediyl or alkendiyl being optionally substituted with one or more halogen(s), R₃ is H or
   - R₂ further forms with R₃ an aromatic group provided that i=0, said aromatic group being optionally substituted by one or more halogen(s);
when a is 0: the radical F₁ is directly linked to the carbon atom of the ester boronic and R₃ is H;
when b is 1:
   - R₄ is an C₁-C₄ alkanediyl or a C₁-C₄ alkenediyl, said alkanediyl or alkendiyl being optionally substituted with one or more halogen(s), R₅ is H or
   - R₄ further forms with R₅ an aromatic group provided that j=0, said aromatic group being optionally substituted by one or more halogen(s);
when b is 0: the radical F₂ is directly linked to the carbon atom of the ester boronic and R₅ is H;
R₁ and R₆, identical or different, are each a group comprising carbon.

According to some embodiments, the molecules of additive A are identical and are of formula (IB) : 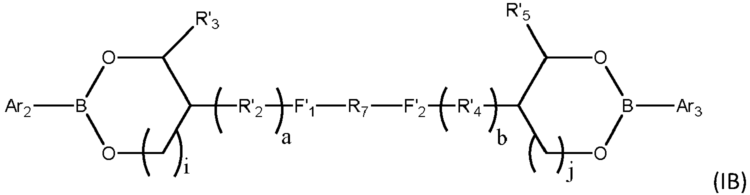 in which
Ar₂ and Ar₃, identical or different, are an aromatic group;
F'₁ and F'₂, identical or different, are selected in the group consisting of -NH-C(O)-, -C(O)-NH-, - NH-C(O)-NH-, -O-C(O)-NH- and -NH-C(O)-O-;
a, b, i and j, identical or different, are natural integers equal to 0 or 1;
when a is 1:
   - R'₂ is a C₁-C₄ alkanediyl or a C₁-C₄ alkenediyl, said alkanediyl or alkendiyl being optionally substituted with one or more halogen(s), R'₃ is H or
   - R'₂ further forms with R'₃ an aromatic group provided that i=0, said aromatic group being optionally substituted by one or more halogen(s);
when a is 0: the radical F'₁ is directly linked to the carbon atom of the ester boronic and R'₃ is H;
when b is 1:
   - R'₄ is a C₁-C₄ alkanediyl or a C₁-C₄ alkenediyl, said alkanediyl or alkendiyl being optionally substituted with one or more halogen(s), R'₅ is H, or
   - R'₄ further forms with R'₅ an aromatic group provided that j=0, said aromatic group being optionally substituted by one or more halogen(s);
when b is 0: the radical F'₂ is directly linked to the carbon atom of the ester boronic and R'₅ is H;
R₇ is a group comprising carbon.

According to some embodiments, step (b) includes a shaping of the non-crosslinked polymer composition, for example by extrusion, injection, compression, molding or thermoforming.

According to some embodiments, steps (a) and (b) are achieved simultaneously by extrusion.

According to some embodiments, step (c) is carried out for a time ranging from 1 min to 1 hour, preferably from 2 min to 30 min, even more preferably from 5 min to 20 min.

According to some embodiments, the mix of step (a) comprises from 0.05 to 10 wt%, preferably from 0.1 to 3.5 wt%, more preferably from 0.5 to 1.5 wt% of the additive A in relation to the weight of the thermoplastic polymer, or to the blend thereof.

According to some embodiments, step (c) is performed by compression molding, injection molding and oven curing.

According to some embodiments, a thermoplastic polymer not carrying any pending boronic ester group is further added during step (a).

According to some embodiments, step (a) comprises the following sub-steps:
(a1) providing a thermoplastic polymer comprising pending boronic ester groups, optionally a thermoplastic polymer not carrying any pending boronic ester group, or a blend thereof, as defined above,
(a2) providing an additive A as defined above,
(a3) mixing the thermoplastic polymer of step (a1) and the additive A of step (a2) at a processing temperature Tₘᵢₓ,
wherein Tₘᵢₓ is higher than the glass transition temperature or the melting temperature of the thermoplastic polymer provided in step (a1) and equal to or lower than the initial temperature of dissociation T_{dis(i)} of the crosslinking agent in the mix of step (a3).

### Definitions

The terms "polymer", "linear polymer" and "branched polymer" have the definition given in WO2017/0294123, on page 15, line 18 to page 16, line 7.

According to this invention, polymer designates both linear polymer chains and branched polymer chains.

**"Boronic ester"** according to the present invention designates a groups comprising the moiety dioxaborolane or dioxaborinane.

**"Dioxaborolane moiety"** according to the present invention is of formula:

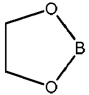

**"Dioxaborinane moiety"** according to the present invention is of formula:

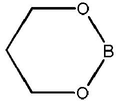

The boronic ester group according to the present invention is a dioxaborolane or dioxaborinane: 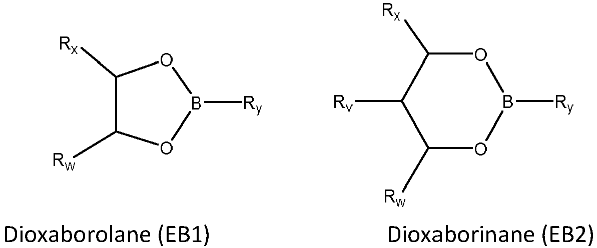 wherein Ry, Rx, Rw and Rv are as defined after.

The term **"pending group"** as used herein designates a side-group of the polymer chain, i.e., a substituent that is not an oligomer nor a polymer. A side-group is not integrated into the main chain of the polymer. The term **"pending boronic ester group"** as used herein designates a boronic ester group (EB1) or (EB2) directly linked by a covalent bond or through a functional group G to a constitutional unit of the polymer by one and only one of its substituents Ry, Rx, Rw, Rz, {Rx, Rw} or {Rx, Rv}.

The substituent attached to the polymer chain can be Ry, as defined later, and then it is said that the boronic ester group is linked to the polymer by the boron atom of the dioxaborolane or dioxoborinane group.

The substituent attached to the polymer chain can by Rx, Rw, Rv, or {Rx, Rw} or {Rx, Rv} if these form together an aliphatic or aromatic ring, as defined later, and then it is said that the boronic ester group is linked to the polymer by the carbon atom of the dioxaborolane or dioxoborinane group.

**"Crosslinking",** or polymer chain crosslinking, has the definition given in WO2017/029413, on page 18, line 6 to page 19, line 9.

It consists of creating covalent chemical bonds between polymer chains that initially are not linked to other by covalent bonds. Crosslinking is accompanied by an increase in connectivity, through covalent bonds, between the various chains that make up the polymer. The crosslinking of linear or branched polymer chains is accompanied by an increase in the molecular dimensions of the chains, notably of the molar masses, and can lead to a network of crosslinked polymers being obtained. The crosslinking of a network of crosslinked polymers is accompanied by an increase in the mass fraction of insoluble material in good non-reactive solvents according to the definition given in WO2017/029413.

The crosslinking of the composition may be assessed by using dynamic mechanical analysis (DMA). The crosslinking is assessed through the appearance of a rubbery plateau above the glass transition temperature or the melting temperature of the thermoplastic polymer at a frequency of 1 Hz.

The **"glass transition temperature",** T_{g}, is defined as the temperature at which the value of the damping factor, or loss factor, tan δ is at a maximum by dynamic mechanical analysis at 1 Hz. The damping factor, or loss factor, tan δ, is defined as the ratio of the loss modulus E" to the storage modulus E' (Mechanical Properties of Solid Polymers, Author(s): I. M. Ward, J. Sweeney; Editor: Wiley-Blackwell; Edition: 3rd Edition; Print ISBN: 9781444319507; DOI: 10.1002/9781119967125).

When a blend of thermoplastic polymers is used in step (a), the relevant glass transition temperature (T_{g}) or melting temperature (Tₘ) is the highest T_{g} or Tₘ of all the thermoplastic polymers being present in the blend at a content of at least 8wt%, in particular at least 4wt%, and notably at least 2wt%, relative to the total weight of the blend. It is understood that it is referred to a glass transition temperature (T_{g}) when the polymer is amorphous and to a melt temperature when the polymer is semi-crystalline.

The **"initial temperature of dissociation",** T_{dis(i)}, of the additive A is the temperature at which, in the mix considered, which can be the mix of step (a), in particular of step (a3), the composition resulting from step (b), or the composition of step (c), some intermolecular non-covalent bonds formed by molecules of additive A with other molecules of additive A or with the thermoplastic polymer start to break. In other terms aggregates of molecules of additive A with other molecules of additive A or with the thermoplastic polymer start to dissociate at the temperature T_{dis(i)}. T_{dis(i)} will thus depend on the nature of the thermoplastic polymer(s) provided in step (a) with which the additive A is mixed and on the quantity of said additive A.

T_{dis(i)} is preferably determined by VT-FTIR experiments according to the methods described in the "methods" paragraph below. When VT-FTIR experiments are not available, the temperature T_{dis(i)} may be determined by rheology using temperature sweep experiments according to the methods described in the "methods" paragraph below.

The **"final temperature of dissociation",** T_{dis(f)}, of the additive A is the temperature at which, in the mix considered, which can be the mix of step (a), in particular of step (a3), the composition resulting from step (b), or the composition of step (c), all the intermolecular non-covalent bonds formed by molecules of additive A with other molecules of additive A or with the thermoplastic polymer are completely broken. In other terms, aggregates of molecules of additive A with other molecules of additive A or with the thermoplastic polymer are completely dissociated at the temperature T_{dis(f)}.

T_{dis(f)} will thus depend on the nature of the thermoplastic polymer(s) provided in step (a) with which the additive A is mixed and on the quantity of said additive A.

T_{dis(f)} is typically determined by VT-FTIR experiments according to the methods described in the "methods" paragraph below. When VT-FTIR experiments are not available, the temperature T_{dis(f)} may be determined by rheology using temperature sweep experiments according to the methods described in the "methods" paragraph below.

By definition, for an additive A in a mix M, the final temperature of dissociation T_{dis(f)} is strictly higher than the initial temperature of dissociation T_{dis(i)}.

A **"group comprising carbon"** according to the present invention is a group based on hydrocarbon, thus mainly consisting of atoms of carbon and hydrogen, which may also include one or more heteroatoms and/or be substituted by one or more halogens. The group preferably includes 1-50, more preferably 1-18, still more preferably 1-12 carbon atoms.

"Heteroatom" according to present invention designates atoms of sulfur, nitrogen, oxygen, boron, phosphorus or silicon. When it replaces a carbon atom, such as a methylene group, the nitrogen is under the form -NH- or -N(C₁-C₆alkyl)-, the sulfur is under the form -S-, -SO- or-SO₂-. "Halogen" according to present invention designates atoms of fluorine, chlorine, bromine or iodine.

The group comprising carbon may be aliphatic or aromatic.

"Aliphatic" according to the present invention designates an "alkyl", "alkenyl", "alkanediyl", "alkenediyl" or "cycloalkyl" group. The valence of the group will be determined case-by-case. In the context of the present invention, an aliphatic group may include heteroatoms. In particular, it may include ester, amide, ether, thioether, secondary or tertiary amine, carbonate, urethane, carbamide or anhydride functions. If applicable, the aliphatic group may be substituted notably by a halogen, an -Rz, -OH, -NH₂, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, - S-Rz, -S-S-Rz, -C(O)-N(H)-Rz, -N(H)-C(O)-Rz group with Rz, R'z, identical or different, representing a C1-C50 alkyl radical.

An "alkyl" group according to the present invention designates a saturated, linear or branched hydrocarbon chain, preferably comprising 1-50 carbon atoms, more preferably 1-18 carbon atoms, still more preferably 1-12 carbon atoms. According to the present invention, ignoring the conventional sense of the term, an "alkyl" group may include one or more heteroatoms. In this way, the term "alkyl" in the context of the present invention also includes "heteroalkyls", that are alkyl groups as defined above comprising one or more heteroatom(s).

An « alkenyl » group according to the present invention designates an unsaturated, linear or branched hydrocarbon chain, preferably comprising 1-50 carbon atoms, more preferably 1-18 carbon atoms, still more preferably 1-12 carbon atoms. According to the invention, ignoring the conventional sense of the term, an "alkenyl" group may also include one or more heteroatoms. In this way, the term "alkenyl" in the context of the present invention also includes "heteroalkenyls", that are alkenyl groups as defined above comprising one or more heteroatom(s).

An "alkanediyl" group according to the present invention designates a divalent, saturated, linear or branched hydrocarbon chain, preferably comprising 1-50 carbon atoms, more preferably 1-18 carbon atoms, still more preferably 1-12 carbon atoms. According to the invention, ignoring the strict sense of the term, an "alkanediyl" group may also include one or more heteroatoms. In this way, the term "alkanediyl" in the context of the present invention also includes "heteroalkanediyls", that are alkanediyl groups as defined above comprising one or more heteroatom(s).

An "alkenediyl" group according to the present invention designates a divalent, unsaturated, linear or branched hydrocarbon chain, preferably comprising 1-50 carbon atoms, more preferably 1-18 carbon atoms, still more preferably 1-12 carbon atoms, for example a vinylene (ethenylene) group or a propenylene group. According to the invention, ignoring the strict sense of the term, an "alkenediyl" group may also include one or more heteroatoms. In this way, the term "alkenediyl" in the context of the present invention also includes "heteroalkenediyls", that are alkenediyl groups as defined above comprising one or more heteroatom(s).

A "cycloalkyl" group according to the present invention designates a cyclic alkyl chain, which may be saturated or partially unsaturated but not aromatic, preferably comprising 3-10 carbon atoms in the ring. The cyclic alkyl chain may include one or more heteroatoms; in this case it will be specifically called "heterocycloalkyl". The group may include more than one ring, and in this way includes fused, linked or spiro rings. Examples include cyclopropyl, cyclopentyl, cyclohexyl, cycloheptyl, pyrrolidinyl, piperidinyl, piperazinyl or morpholinyl groups. If applicable, the cycloalkyl group may be substituted notably by a halogen, an -Rz, -OH, -NH₂, -NHRz, -NRzR'z, - C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz group with Rz, R'z, identical or different, representing a C1-C50 alkyl radical. If applicable, the cycloalkyl group maybe divalent; in this case it is preferably called a "cycloaliphatic" radical.

"Aromatic" according to the present invention designates a monovalent or multivalent group comprising an aromatic hydrocarbon group. The valence of the group will be determined case-by-case.

The aromatic group may include heteroatoms; in this case it is called a "heteroaromatic" radical. In particular, it may include ester, amide, ether, thioether, secondary or tertiary amine, carbonate, urethane, carbamide or anhydride functions. An aromatic group may include one or more rings that are fused or covalently linked. If applicable, the aromatic group may be substituted notably by a halogen, an -Rz, -OH, -NH₂, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, - O-Rz, -SH, -S-Rz, -S-S-Rz, -C(O)-N(H)-Rz, -N(H)-C(O)-Rz group with Rz, R'z, identical or different, representing a C1-C50 alkyl radical, or by a functional group chosen from among the functional groups that are polymerisable.

The term "aromatic" includes "arylaromatic" groups, that is a group comprising at least one aromatic group and at least one aliphatic group, as defined. The aliphatic group may be linked to one part of the molecule and the aromatic group to another part of the molecule. The group may include two aromatic groups, each linked to a part of the molecule and linked between them by an aliphatic chain.

"Aryl" according to the present invention designates an aromatic hydrocarbon group. The term "aryl" includes aralkyl and alkyl-aryl groups. The aromatic hydrocarbon group may be substituted once or more than once notably by a halogen, an -Rz, -OH, -NH₂, -NHRz, -NRzR'z, -C(O)-H, - C(O)-Rz, -C(O)-OH, -C(O)-NRzR'z, -C(O)-O-Rz, -O-C(O)-Rz, -O-C(O)-O-Rz, -O-C(O)-N(H)-Rz, - N(H)-C(O)-O-Rz, -O-Rz, -SH, -S-Rz, -S-S-Rz, -C(O)-N(H)-Rz, -N(H)-C(O)-Rz group with Rz, R'z, identical or different, representing a C1-C50 alkyl radical.

"Alkyl-aryl" according to the present invention designates an alkyl group, as defined above, linked to the rest of the molecule through an aromatic group, as defined above.

"Aralkyl" according to the present invention designates an aryl group, as defined above, linked to the rest of the molecule through an aliphatic group, as defined above.

"Heteroaryl" according to the present invention designates an aryl group in which at least one of the atoms of the aromatic ring is a heteroatom. "Heteroalkyl-aryl" according to the present invention designates an alkyl-aryl group, as defined, substituted by at least one heteroatom. "Heteroaralkyl" according to the present invention designates an aralkyl group, as defined, substituted by at least one heteroatom.

### DETAILED DESCRIPTION

The process of the invention comprises the following steps :
(a) heating, to a temperature Tₘᵢₓ, a mix M comprising:
   - a thermoplastic polymer as defined herein, and
   - an additive A as defined herein,

   wherein Tₘᵢₓ is higher than the glass transition temperature or the melting temperature of the thermoplastic polymer used in step (a) and
   Tₘᵢₓ is equal to or lower than the initial temperature of dissociation T_{dis(i)} of the additive A in the mix of step (a),
(b) recovering a composition comprising the polymer of step (a), which is not crosslinked, and the additive A, and
(c) curing the non-crosslinked composition of step (b) at a temperature T_{c} to provide the crosslinked polymer composition,
   wherein T_{c} satisfies the following : ${T}_{c} \geq \left({T}_{dis \left(i\right)}+{T}_{dis \left(f\right)}\right) / 2 ,$ where T_{dis(i)} is the initial temperature of dissociation of the additive A in the mix of step (a) and T_{dis(f)} is the final temperature of dissociation of the additive A in the composition of step (c).

### The thermoplastic polymer

The thermoplastic polymer used in step (a) comprises pending boronic ester groups independently selected in the group consisting of dioxaborolane and dioxaborinane of the following formula EB-1 and EB-2: 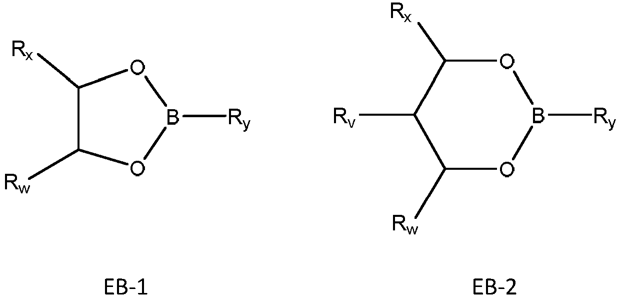 in which
Rx, Rv and Rw are identical or different and each represent a hydrogen atom or a group comprising carbon, or form together, as a pair, an aliphatic or an aromatic ring, and
Ry is a group comprising carbon, Ry being linked to the boron atom of the dioxaborolane or dioxaborinane ring by a covalent bond through a carbon atom.

When Rx and Rv form together an aliphatic or an aromatic ring, the corresponding group is referenced as {Rx, Rv}. The same applies for the group formed by Rx and Rw.

Each pending boronic ester group is linked to the polymer either by one or more carbon atom(s) of the dioxaborolane or dioxaborinane ring, i.e. via Rₓ, R_{w} and/or, if applicable, Rᵥ, or by the boron atom of the dioxaborolane or dioxaborinane ring, i.e. via R_{y}. Accordingly:
- Ry is further linked to the polymer directly by a covalent bond or through a functional group G covalently linked to the polymer; or
- the substituent selected from Rx, Rw, Rv, {Rx, Rw} or {Rx, Rv} is linked to the polymer by a covalent bond or through a functional group G covalently linked to the polymer.

Preferably, Rx, Rw and Rv are identical or different and each represents an alkyl, alkenyl, aryl, aralkyl alkyl-aryl or cycloalkyl group. Said alkyl, alkenyl, aryl, aralkyl alkyl-aryl or cycloalkyl group can contain heteroatoms, in particular chosen from among O, N, S or Si, and/or may be substituted. One or more, preferably one to four, methylene unit(s) of said alkyl, alkenyl, aryl, aralkyl alkyl-aryl or cycloalkyl group are optionally replaced by-O-, -S-, -C(O)-, -SO₂-, -NH- or - N(C₁-C₆ alkyl)-. In particular, Rx and/or Rw and/or Rv form together, as pairs, an aliphatic or aromatic ring.

In particular, these radicals Rx, Rw and Rv may be substituted by functional groups notably selected from a halogen, an -Rz, -OH, -NH₂, -NHRz, -NRzR'z, -C(O)-H, -C(O)-Rz, -C(O)-OH, - C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, - SH, -S-Rz, -S-S-Rz, -C(O)-N(H)-Rz, -N(H)-C(O)-Rz group with Rz, R'z, identical or different, representing a C₁-C₅₀ alkyl group.

In particular, these radicals Rx, Rw and Rv may include ester, amide, carbamate, ether, thioether, secondary or tertiary amine, carbonate, urethane, carbamide (*id est* urea function of formula - NH-C(O)-NH-) or anhydride functions.

Preferably, Ry represents an alkyl, alkenyl, aryl, aralkyl, alkyl-aryl or cycloalkyl group. Said alkyl, alkenyl, aryl, aralkyl, alkyl-aryl or cycloalkyl group can contain heteroatoms, in particular chosen from among O, N, S or Si, and/or may be substituted. One or more, preferably one to four, methylene unit(s) of said alkyl, alkenyl, aryl, aralkyl, alkyl-aryl or cycloalkyl group are optionally replaced by -O-, -S-, -C(O)-, -SO₂-, -NH- or -N(C₁-C₆ alkyl)-. In particular, this radical Ry may be substituted by functional groups, notably selected from a halogen, an -Rz, -OH, -NH₂, -NHRz, -NRzR'z, -C(O)-H, -C(O)-Rz, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -SH, -S-Rz, -S-S-Rz, -C(O)-N(H)-Rz, -N(H)-C(O)-Rz group with Rz, R'z, identical or different, representing a C₁-C₅₀ alkyl radical. In particular, this radical Ry may include ester, amide, carbamate, ether, thioether, secondary or tertiary amine, carbonate, urethane, carbamide (*id est* urea function of formula -NH-C(O)-NH-) or anhydride functions. Each pending boronic ester groups is preferably linked, through Rx and/or Ry, to a polymer chain or to a functional group G covalently linked to the polymer, as defined below. When their substituents {Rx, Rw} or {Rx, Rv} together form an aliphatic or an aromatic ring, the pending boronic ester groups may be linked, through their substituents {Rx, Rw} or {Rx, Rv} and/or Ry, to a polymer chain or to a functional group G covalently linked to polymer chains, as defined below. The pending boronic ester group(s) may notably be selected among the boronic ester groups described in example 1 of WO2017/029413.

According to some embodiments, EB-1 and EB-2 are selected in the group consisting of : 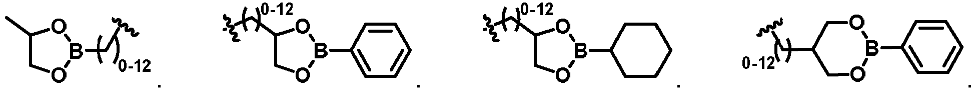 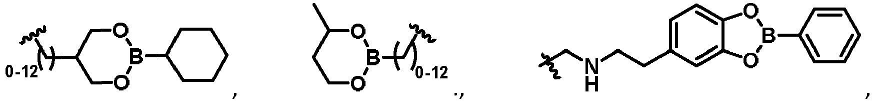 and 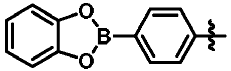 in which the wavy line represents the point of attachment to the functional group G which is directly linked to the polymer by covalent bond.

As non-limiting examples, the functional group G may be the result of the reaction of a thiol functions with an alkene bond of polydienes, such as polybutadiene, polyisoprene and their copolymers, vinyl copolymers with pending alkene groups, or polyolefins obtained by ring-opening metathesis polymerisation (ROMP) or by acyclic diene metathesis (ADMET) (Charles E. Hoyle, Christopher N. Bowman, Angew. Chem. Int. Ed. 2010, 49, 1540-1573; Kemal Arda Günay, Patrick Theato, Harm-Anton Klok, Journal of Polymer Science Part A: Polymer Chemistry 2013, 51, 1-28). The functional group G may also be the result of radical grafting of maleimide or methacrylic, acrylic, styrenic or maleic ester functions to polyethylene and polypropylene for example (G. Moad, Prog. Polym. Sci. 1999, 24, 81-142; Elisa Passagliaa, Serena Coiai, Sylvain Augier, Prog. Polym. Sci. 2009, 34, 911-947). The functional group G may be the result of reaction of isocyanate functions react with the pending alcohol, amine or thiol groups on the polymers (Kemal Arda Günay, Patrick Theato, Harm-Anton Klok, Journal of Polymer Science Part A: Polymer Chemistry 2013, 51, 1-28; Charles E. Hoyle, Andrew B. Lowe, Christopher N. Bowman, Chem. Soc. Rev., 2010, 39, 1355-1387). The functional group G may also be the result of Michael additions of electrophilic alkene groups with nucleophiles such as thiols, primary or secondary amines or phosphines (Brian D. Mather, Kalpana Viswanathan, Kevin M. Miller, Timothy E. Long, Prog. Polym. Sci. 2006, 31, 487-531). Among the electrophilic alkene groups, non-limiting examples include acrylates, acrylamides, maleimides, methacrylates and vinyl sulfones. The functional group G may also be the result of a nucleophilic substitution or a ring-opening reaction with nucleophilic functions such as alcohols, thiols, amines or carboxylic acids (Kemal Arda Günay, Patrick Theato, Harm-Anton Klok, Journal of Polymer Science Part A: Polymer Chemistry 2013, 51, 1-28). These nucleophilic functions can, for example, open epoxides present in the main chain of the polymers, such as are found in epoxidised natural rubber, or pending epoxide functions such as are found in vinylic copolymers prepared with glycidyl methacrylate. The functional group G may also be ester, thioester or amide function resulting from reaction of alcohol, thiol or amine function with pending ester or activated ester function. This approach is notably used for vinylic polymers functionalised with pending ester functions, such as for example poly(methyl methacrylate). The functional groups enabling the molecule containing the boronic ester function to be covalently linked to the polymer are therefore numerous and varied, and the person skilled in the art knows how to select the functional group of choice depending on the functions present on the polymer and the grafting conditions (temperature, reaction medium (molten state or in solution), kinetics, use of a catalyst, etc.).

According to some embodiments, the thermoplastic polymer comprising two or more pending boronic ester groups used in step (a) is as defined for thermoplastic polymer carrying boronic ester functional groups P1 in WO2017/029413, in particular on page 26, line 10 to page 30, line 2 and page 37, line 30 to page 38, line 17.

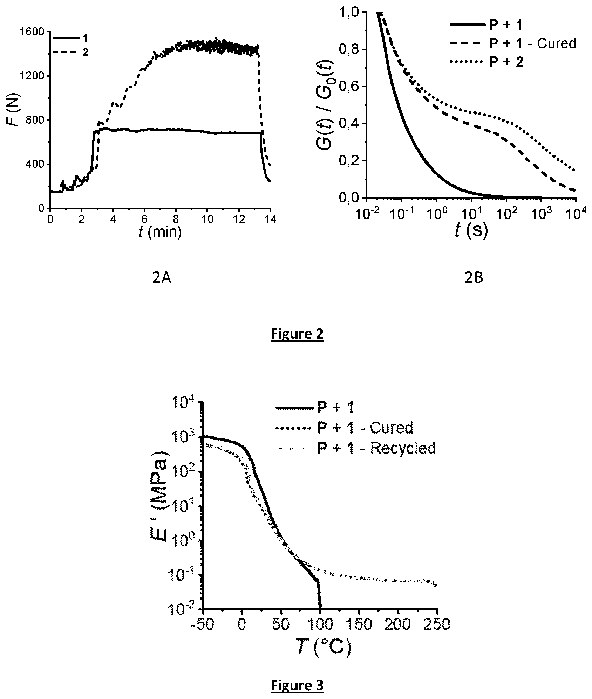

The thermoplastic polymer and the additive A react together to form crosslinks under the processing conditions described hereafter, via boronic ester metathesis reaction as described in WO2017/029413 on page 28, line 27 to page 29, l9, page 30, line 4 to page 32, line 33, page 39, line 19 to page 40, line 19 and on figure 2.

In particular, the molar ratio of [repetition units of polymer not containing pending boronic ester functions]/[repetition units of polymer containing pending boronic ester functions] is preferably between 0.01 and 1000, more preferably between 0.1 and 250, and still more preferably between 1 and 100. The obtained crosslinks are exchangeable by boronic metathesis reactions. The inventors think that the exchange reactions between boronic esters enables a circulation of crosslinks and could explain the thermoplastic behavior when the composition, in itself, is insoluble like a thermoset.

The thermoplastic polymer may comprise additional side groups that are deprived of a boronic ester group. In particular, these side groups may comprise functions able to form non-covalent bonds such as aryl group, in particular phenyl group, halogen, amide function of formula -NH-C(O)-, urea function of formula -NH-C(O)-NH- and carbamate function of formula -O-C(O)-NH.

Halogen atom are able to form dipole-dipole interactions. Aromatic rings are able to achieve π-π stacking.

In some embodiments, a blend of thermoplastic polymers comprising pending boronic ester groups as defined above is used in step (a).

In some embodiments, a blend of thermoplastic polymers comprising pending boronic ester groups as defined above and of thermoplastics comprising no pending boronic ester group as defined above is used in step (a).

### Additive A

Additive A is a molecule able to react with the pending boronic ester groups of the thermoplastic polymer to form a crosslinked polymer composition, preferably a crosslinked network, containing pending links and crosslinks that are exchangeable by boronic ester metathesis reactions and able to form intermolecular non-covalent interactions with other molecules of additive A and/or with the thermoplastic polymer. To this end, each molecule of additive A comprises:
- two boronic ester functions. Each boronic ester function comprises a dioxaborolane moiety or a dioxaborinane moiety. The two boronic ester functions are linked to the rest of the molecule either both by at least one carbon atom of the dioxaborolane or dioxaborinane ring or both by the boron atom of the dioxaborolane or dioxaborinane ring, and
- two or more functions F, identical or different, selected in the group consisting of an amide function of formula -NH-C(O)-, a urea function of formula -NH-C(O)-NH- and a carbamate function of formula -O-C(O)-NH-.

The molecules of additive A may also contain other functions able to form intermolecular non-covalent interactions such as halogen atoms, which are able to form dipole-dipole interactions, aliphatic groups, which are capable of van der Waals interactions, and aromatic rings, which are able to achieve π-π stacking. Preferably, the molecules of additive A further comprise aromatic rings, in particular optionally substituted phenyl groups.

Preferably, the molecule of additive A each comprises two or more, and notably two, identical functions F selected in the group consisting of an amide function of formula -NH-C(O)-, a urea function of formula -NH-C(O)-NH- and a carbamate function of formula -O-C(O)-NH-.

The molecules of additive A are preferably identical to each other.

Depending on the temperature, the molecules of additive A are able to "associate", it means to form intermolecular non-covalent interactions with other molecules of additive A and/or with the thermoplastic polymer. With an increase of temperature, the molecules will later dissociate from the other molecules of additive A and/or from the thermoplastic polymer. In the context of the present invention, additive A and the thermoplastic polymer of step (a) are selected so that the initial temperature of dissociation T_{dis(i)} of the molecules of additive A is higher than the glass transition temperature (T_{g}) or melting temperature (Tₘ) of the thermoplastic polymer used in the process.

Examples of intermolecular non-covalent bonds includes hydrogen bonds, notably formed by the urea, amide and/or carbamate functions, π-π stacking when aromatic groups are present, Van der Waals interactions, dipole-dipole interactions and coordination bonds.

Thus, the molecules of additive A are able to form intermolecular non-covalent interactions with other molecules of additive A and/or with the thermoplastic polymer through the presence of at least the two or more functions F, identical or different, selected in the group consisting of an amide function of formula -NH-C(O)-, a urea function of formula -NH-C(O)-NH- and a carbamate function of formula -O-C(O)-NH-.

At a temperature lower than or equal to the initial temperature of dissociation T_{dis(i)}, the formation of such intermolecular non-covalent interaction prevents the crosslinking between the molecules of additive A and the thermoplastic polymer. Indeed, when such intermolecular non-covalent interactions are formed, the molecules of additive A are in a spatial orientation and arrangement making the boronic ester function(s) unavailable for reacting with the pending boronic ester groups of the thermoplastic polymer, and thus achieving crosslinking.

As the temperature Tₘᵢₓ at which step (a) is carried out is lower than or equal to T_{dis(i)}, the molecules of additive A at Tₘᵢₓ are associated together and/or with the thermoplastic polymer by non-covalent interactions.

Preferably, each molecule of additive A independently comprises a radical Y between the two boronic ester functions, Y being defined as the core of the molecule. Preferably, the core of the molecule of additive A presents an element of symmetry chosen from a mirror plan or a C2 axis of rotation. Preferentially, the molecule, and not only its core Y, presents an element of symmetry chosen from a mirror plan or a C2 axis of rotation.

Preferably, the molecule of additive A is of formula (IA) or (IB).

According to one embodiment, the molecule of additive A is of formula (IA): 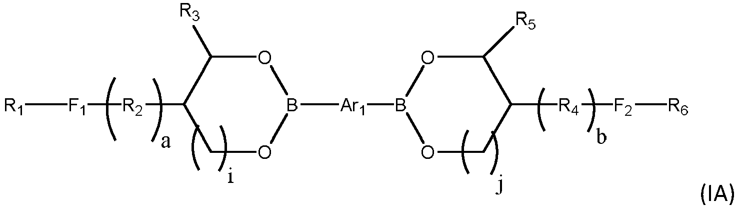 in which
Ar₁ is an aromatic group,
F₁ and F₂, identical or different, are selected in the group consisting of -NH-C(O)-, -C(O)-NH-, -NH-C(O)-NH-, -O-C(O)-NH- and -NH-C(O)-O-;
a, b, i and j, identical or different, are natural integers equal to 0 or 1;
when a is 1:
   - R₂ is a C₁-C₄ alkanediyl or a C₁-C₄ alkenediyl, said alkanediyl or alkenediyl being optionally substituted with one or more halogen(s), R₃ is H or
   - R₂ further forms with R₃ an aromatic group provided that i=0, said aromatic group being optionally substituted by one or more halogen(s);
when a is 0: F₁ is directly linked to the carbon atom of the ester boronic and R₃ is H;
when b is 1:
   - R₄ is a C₁-C₄ alkanediyl or a C₁-C₄ alkenediyl, said alkanediyl or alkenediyl being optionally substituted with one or more halogen(s), R₅ is H or
   - R₄ further forms with R₅ an aromatic group provided that j=0, said aromatic group being optionally substituted by one or more halogen(s);
when b is 0, F₂ is directly linked to the carbon atom of the ester boronic and R₅ is H;
R₁ and R₆, identical or different, are each a group comprising carbon, preferably substituted with one or more halogen(s).

Preferably, the substituent eventually presents on radical(s) Ar₁, R₁ to R₆ does not comprise a function selected in the group consisting of -NH-C(O)-, -C(O)-NH-, -NH-C(O)-NH-, -O-C(O)-NH- and -NH-C(O)-O-. Thus, only F₁ and F₂ can be an amide function, a urea function, a carbamate function.

Advantageously, Ar₁ has an element of symmetry chosen from a mirror plan or a C2 axis of rotation. Ar₁ is preferably an aryl or heteroaryl, under their divalent form. More preferably, Ar₁ is a non-substituted phenylene. More preferably, Ar₁ is a non-substituted phenylene and the boronic ester functions are in para; thus the molecule corresponds to formula:

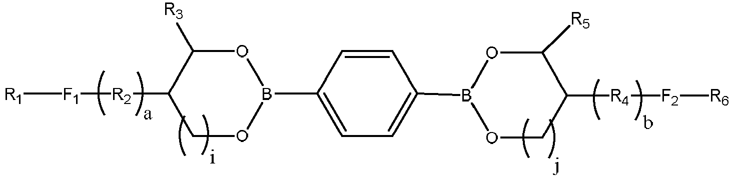

In all embodiments:
Preferably, i=j.

Preferably, F₁ and F₂ are identical and selected from an amide function, a carbamate function and a urea function.

Preferably, a=b.

R₂ is preferably -CH₂- or -CH₂-CH₂- or, provided that i=0, R₂ can form with R₃ a phenylene, corresponding then with the boronic ester to the group of the following formula:

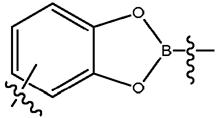

R₄ is preferably -CH₂- or -CH₂-CH₂- or, provided that j=0, R₄ can form with R₅ a phenylene, corresponding then with the boronic ester to the group of the following formula:

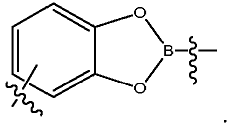

R₂ and R₄ are preferably identical.

R₁ and R₆ can be broadly independently selected from groups comprising carbon. R₁ and R₆, identical or different, preferably represent an alkyl, alkenyl, aryl, cycloalkyl, heteroaryl, heteroalkyl or heterocycloalkyl group, and each of these groups may be substituted, in particular by one or more halogen atom(s). Preferentially, R₁ and R₆ are by themselves crystalline, accordingly the melting point of their corresponding molecule is preferably higher than 0°C. R₁ and R₆, identical or different, preferably represent cyclohexyl, alkyl group comprising 1 to 6 carbon atoms or phenyl.

In particular, Ar₁, F₁, F₂, i, j, R₃, R₅, a, b, R₂ and R₄ are selected so that the molecule presents an element of symmetry chosen from a mirror plan or a C2 axis of rotation.

According to some embodiments, molecules of additive A are selected in the group consisting of : 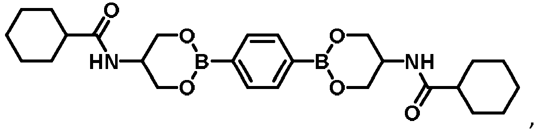 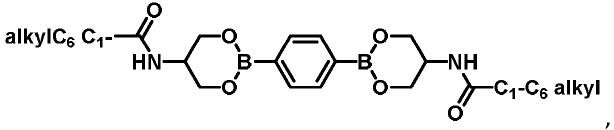 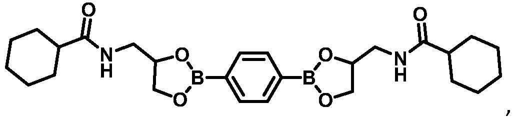 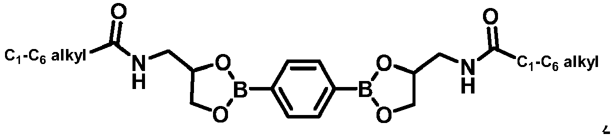 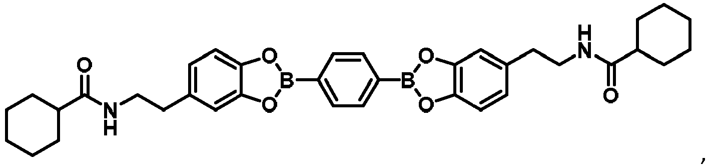 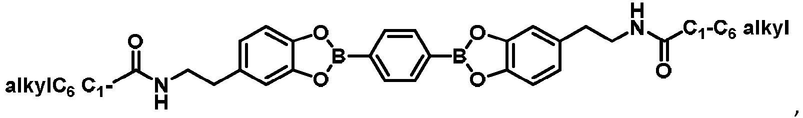 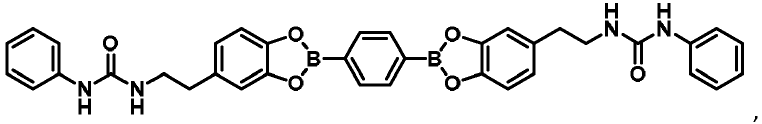 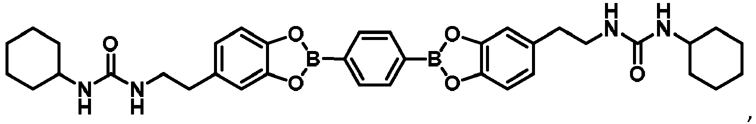 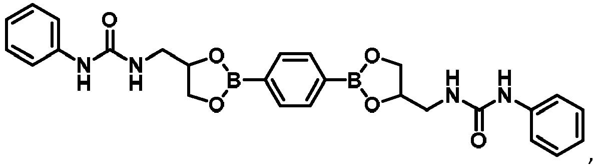 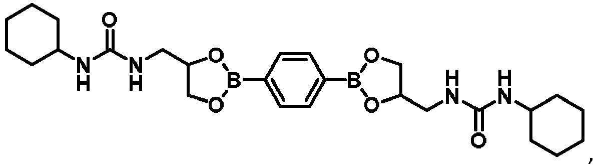 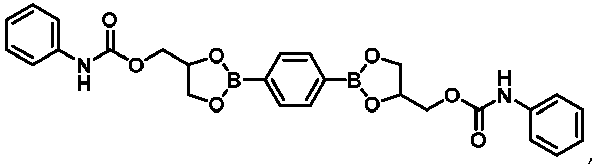 and

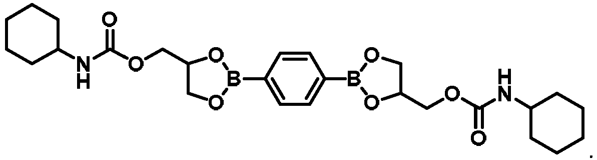

According to another embodiment, the molecule of additive A is of formula (IB): 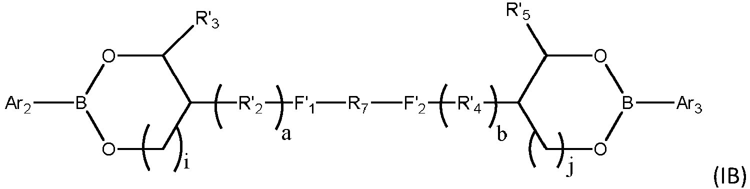 in which
Ar₂ and Ar₃, identical or different, are an aromatic group;
F'₁ and F'₂, identical or different, are selected in the group consisting of -NH-C(O)-, -C(O)-NH-, - NH-C(O)-NH-, -O-C(O)-NH- and -NH-C(O)-O-;
a, b, i and j, identical or different, are natural integers equal to 0 or 1;
when a is 1:
   - R'₂ is a C₁-C₄ alkanediyl or a C₁-C₄ alkenediyl, said alkanediyl or alkendiyl being optionally substituted with one or more halogen(s), R'₃ is H, or
   - R'₂ further forms with R'₃ an aromatic group provided that i=0, said aromatic group being optionally substituted by one or more halogen(s);
when a is 0, F'₁ is directly linked to the carbon atom of the boronic ester and R'₃ is H;
when b is 1:
   - R'₄ is an C₁-C₄ alkanediyl, or a C₁-C₄ alkenediyl, said alkanediyl or alkendiyl being optionally substituted with one or more halogen(s), R'₅ is H or
   - R'₄ further forms with R'₅ an aromatic group provided that j=0, said aromatic group being optionally substituted by one or more halogen(s);
when b is 0, F'₂ is directly linked to the carbon atom of the ester boronic and R'₅ is H;
R₇ is a group comprising carbon.

Preferably, the substituent eventually presents on radical(s) Ar₂, Ar₃, R'₂ to R'₅ and R₇ does not comprise a function selected in the group consisting of -NH-C(O)-, -C(O)-NH-, -NH-C(O)-NH-, -O-C(O)-NH- and -NH-C(O)-O-. Thus, only F'₁ and F'₂ can be an amide function, an urea function, a carbamate function.

R₇ can be broadly selected from groups comprising carbon. R₇ preferably represents an alkyl, alkenyl, aryl, cycloalkyl, heteroaryl, heteroalkyl or heterocycloalkyl group, under their divalent form, and each of these divalent groups may be substituted, in particular by one or more halogen atom(s). R₇ preferably represents phenylene. More preferably, R₇ is a non-substituted phenylene and F'₁ and F'₂ are in para position; thus the molecule corresponds to formula:

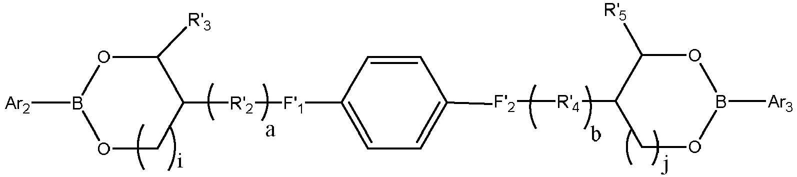

Preferably, F'₁ and F'₂ are both an amide function or a carbamate function or a urea function. Advantageously, F'₁-R₇-F'₂ has an element of symmetry chosen from a mirror plan or a C2 axis of rotation.

In all embodiments:
Preferably, i=j.

Preferably, a=b.

R'₂ is preferably -CH₂- or -CH₂-CH₂- or provided that i=0, R'₂ can form with R'₃ a phenylene, corresponding then with the boronic ester to the group of the following formula:

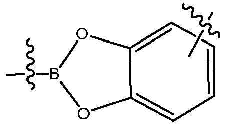

R'₄ is preferably -CH₂- or -CH₂-CH₂- or provided that j=0, R'₄ can form with R'₅ a phenylene, corresponding then with the boronic ester to the group of the following formula:

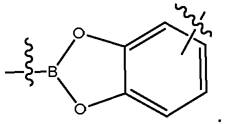

R'₂ and R'₄ are preferably identical.

Ar₂ and Ar₃, identical or different, are an aryl or heteroaryl. Preferentially, Ar₂ and Ar₃ are by themselves crystalline, accordingly the melting point of their corresponding molecule is preferably higher than 0°C. More preferably, Ar₂ is a non-substituted phenylene. More preferably, Ar₂ is a non-substituted phenylene.

In particular, Ar₂, Ar₃, F'₁, F'₂, i, j, R'₂ to R's, a, b and R₇ are selected so that the molecule presents an element of symmetry chosen from a mirror plan or a C2 axis of rotation.

According to some embodiments, molecules of additive A are selected in the group consisting of : 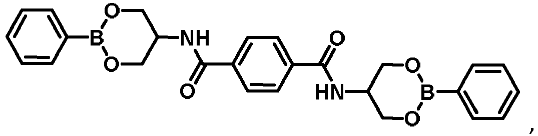 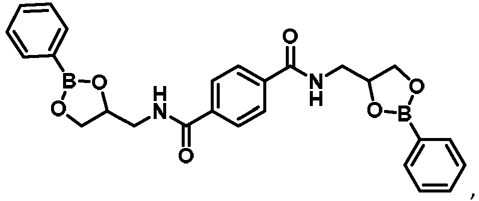 and

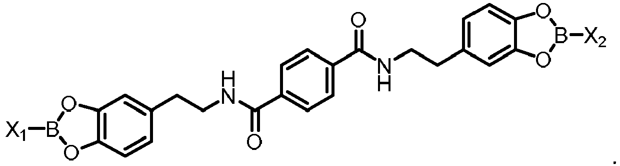

The use of a compound of formula (IA) or of a compound of formula (IB) to obtain a composition comprising crosslinked polymers/vitrimers, containing pending links and crosslinks that are exchangeable by boronic ester metathesis reactions will depend on the nature of the atom through which the pending boronic ester functional groups are linked to the thermoplastic polymer.

In this way, when the pending boronic ester groups of formula EB-1 or EB-2 are linked to the thermoplastic polymer by at least one carbon atom of the dioxaborolane or dioxaborinane ring, meaning via Rₓ, R_{w} and/or, if applicable, Rᵥ, a compound of formula (IA) is chosen as the molecule of additive A.

In this way, when the pending boronic ester groups of formula EB-1 or EB-2 are linked to the thermoplastic polymer by the boron atom of the dioxaborolane or dioxaborinane ring, meaning via R_{y}, a compound of formula (IB) is chosen as the molecule of additive A.

### Preferred embodiments of the process of the invention

### Step (a)

Preferably, the mix of step (a) comprises from 0.05 to 10 wt%, preferably from 0.1 to 3.5 wt%, more preferably from 0.5 to 1.5 wt% of the additive A relative to the weight of the thermoplastic polymer or blend thereof.

Advantageously, step (a) comprises the following successive sub-steps :
(a1) providing a thermoplastic polymer, the thermoplastic polymer comprising pending boronic ester groups as defined herein,
(a2) providing an additive A as defined herein,
(a3) mixing the thermoplastic polymer of step (a1) and the additive A of step (a2) at a processing temperature Tₘᵢₓ,
wherein Tₘᵢₓ is higher than the glass transition temperature or the melting temperature of the thermoplastic polymer provided in step (a1) and equal to or lower than the initial temperature of dissociation T_{dis(i)} of the additive A [in the mix of step (a3)].

Advantageously, step (a3) is carried out for a time ranging from 30 seconds to 2 hours, preferably from 1 min to 1 hour, even more preferably from 2 min to 30 min. It is understood that the duration of step (a3) is set so that the thermoplastic polymer does not degrade during step (a3). The processing temperature Tₘᵢₓ is preferably comprised between the glass transition temperature, T_{g}, or the melting temperature Tₘ, of the thermoplastic polymer with which additive A is mixed, and the initial temperature of dissociation T_{dis(i)} of the additive A in the mix of step (a) , more preferably between T_{g} + 5°C, or Tₘ + 5°C, and T_{dis(i)} -5 °C even more preferably between between T_{g} + 10°C or Tₘ + 10°C and T_{dis(i)} -10 °C.

At the end of step (a), a non-crosslinked polymer composition comprising the thermoplastic polymer, or a blend thereof, in mixture with additive A is provided. In other terms, the non-crosslinked composition comprises the thermoplastic polymer comprising pending boronic ester groups, or a blend thereof, or a blend of thereof with thermoplastics not containing pending boronic ester group, with which additive A is mixed. At a temperature lower than the initial temperature of dissociation T_{dis(i)} of the additive A, molecules of additive A in the non-crosslinked polymer composition forms non-covalent interactions with other molecules of additive A and/or with the thermoplastic polymer, blocking the exchange reaction by metathesis between boronic ester substituents of the polymer and of the additive A.

### Step (b)

In step (b), the non-crosslinked polymer composition is recovered. During recovering, the composition is typically shaped via processes known from the skilled person, including, compression molding, injection molding, extrusion, blow molding, fiber spinning, powder coating, rotational molding, and thermoforming.

Steps (a) and (b) may be achieved simultaneously by performing extrusion. Accordingly, the mix of step (a) is carried out in an extruder.

Step (b) may also include the addition in the non-crosslinked composition of additives such as pigments, colorants, blueing agents, fillers, plasticizers, impact modifiers, fibers, flame retardants, antioxidants, lubricants, wood, glass and metal.

The non-crosslinked polymer recovered at step (b) may be stored, transported, used in suitable applications, granulated, dispersed in a resin, etc..

All the operations achieved in step (b) are carried out at a temperature equal to or lower than the initial temperature of dissociation T_{dis(i)} of the additive A in the non-crosslinked polymer composition.

### Step (c)

During the curing step, the non-crosslinked polymer composition recovered at step (b) is heated at a temperature T_{c} so that the intermolecular non-covalent bonds formed by the additive A molecules in the non-crosslinked polymer composition are completely broken, i.e. the aggregated molecules of additive A are dissociated, and the ester boronic functions of the additive A and of the polymer crosslink to afford a crosslinked polymer composition, in particular a vitrimer composition. At this step, the additive A plays its function of crosslinking agent.

At temperature T_{c} crosslinking can occur. T_{c} satisfies the following : ${T}_{c} \geq \left({T}_{dis \left(i\right)}+{T}_{dis \left(f\right)}\right) / 2 ,$ where T_{dis(i)} is the initial temperature of dissociation in the mix of step (a) and T_{dis(f)} is the final temperature of dissociation of the additive A in the composition of step (c).

It is understood that the T_{c} temperature is set so as to be lower than the temperature at which the thermoplastic polymer, or blend thereof, or additive A starts to degrade, such degradation temperature being known by the skilled person.

Preferably, T_{c} is equal or higher than T_{dis(f)}. Preferably, T_{c} is equal or lower than T_{dis(f)} + 50°C, preferably equal or lower than T_{dis(f)} + 40°C.

According to a preferred embodiment, step (c) is carried out for a time ranging from 1 min to 1 hour, preferably from 2 min to 30 min, even more preferably from 5 min to 20 min. It is understood that the duration of step (c) is set so that the thermoplastic polymer does not degrade at the temperature T_{c}.

Step (c) is typically performed by compression molding, injection molding and oven curing.

### METHODS

### Determination of the initial and final temperatures of dissociation T_{dis(i)} and T_{dis(f)} of the additive A

### • By performing a Variable-Temperature Fourier-Transformed Infrared Spectroscopy (VT-FTIR) experiment on a mix of step (a)

This method is the most accurate method.

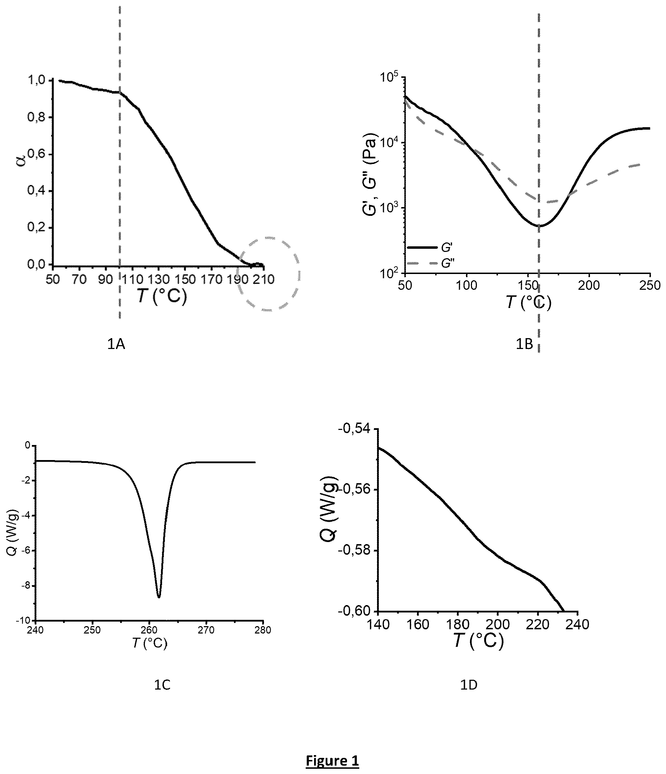

A relevant mix comprising the thermoplastic polymer comprising pending boronic ester groups and the additive A as defined in the present invention, is gradually heated over time, by maintaining isotherms for 3 minutes every 5°C. FTIR gives molecular information on the degree of association of the molecules of additive A, by following the stretch band of a non-covalent bond formed by the molecules of additive A, for example the hydrogen bonded N-H stretch band of an amide function at 3292 cm⁻¹. While the temperature increases, the number of the monitored non-covalent bonds decreases until complete disappearance, and thus the normalized intensity α of the corresponding stretch band also decreases down to zero, indicating the dissociation of the molecules of additive A in the mix. The protocol employed to perform this experiment (3-minute isotherms), allows the system to be closer to equilibrium than the temperature sweep experiment in rheology described below, thus giving information on the system at the minute timescale. Thus, the dissociation of molecules of additive A starts when the normalized intensity of the monitored stretch band starts to decrease (dashed line in figure 1A), the corresponding temperature being the initial temperature of dissociation T_{dis(i)} of the additive A. The final temperature of dissolution T_{dis(f)} of the additive A corresponds to the temperature at which this stretch band disappears, i.e. the normalized intensity α is equal to 0 (dashed circle in figure 1A).

### • By performing a temperature sweep experiment in rheology on a mix of step (a)

When VT-FTIR is not available, this less accurate method can be used.

A relevant mix comprising the thermoplastic polymer comprising pending boronic ester groups and the additive A as defined in the present invention, is gradually heated over time, typically at 10°C/min. Shear storage modulus (G') and loss modulus (G") are measured at a frequency of 1 rad/s during the heating. With heating, shear storage (G') and loss (G") moduli decrease with temperature, indicating a fluidification of the system, which is expected for a thermoplastic. From a temperature T (dashed line in figure 1B) the storage modulus (G' ; black solid curved line) increases. The loss modulus (G" ; grey dashed curved line) also increases at a temperature slightly higher than for G'. This increase in storage and loss moduli reflects the crosslinking reaction taking place between the thermoplastic polymer and the dissociated additive A. The initial temperature of dissociation T_{dis(i)} is about 30°C - 50°C lower than the temperature at which the storage modulus G' start to increase.

### DESCRIPTION OF THE FIGURES

Figure **1A****.** VT-FTIR heating of the **P/1** mixture at 1 wt%, as defined in examples, with 3-minute isotherms every 5°C, *α* is the normalized intensity of the hydrogen bonded N-H stretching band at 3292 cm⁻¹.
Figure **1B****.** Rheology temperature sweep experiment performed at 1 rad/s: heating at 10 °C/min of the **P/1** mixture at 1 wt%, as defined in examples.
Figure **1C****.** DSC of the first heat of pure **1,** as defined in examples.
Figure **1D****.** DSC of the first heat of the **P/1** mixture at 1 wt%, as defined in examples. Both DSC experiments were performed at a 10 °C/min ramp.
Figure **2A****.** Force required to keep the screw speed rotation constant as a function of extrusion time for mixtures of **1** and **2** with **P,** as defined in examples, (solid and dashed lines, respectively). Both extrusions were performed at 100 °C.
Figure **2B****.** Normalized stress-relaxation performed at 100°C (normalized relaxation modulus as a function of time) of a polymer **P** after extrusion at 100°C with 1 wt% of **1** and **2,** as defined in examples, (solid and dotted lines, respectively) and of polymer **P** with 1 wt% of **1** after extrusion and compression molding for 10 min at 220°C (dashed line).
Figure **3****.** DMA of the material obtained after extrusion (i.e. after steps (a) and (b)) of polymer **P** with 1 wt% of **1,** as defined in examples, (black solid line), after extrusion and compression molding (10 minutes at 220 °C, black dotted line) of polymer **P** with 1 wt% of **1** (i.e. after steps (A), (b) and (c)), and of the latter material after recycling (light grey dashed line). Frequency is 1 Hz.

### EXAMPLES

### Example 1: synthesis of additive 1 (according to the invention)

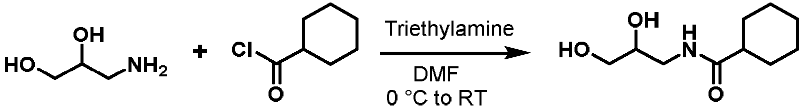

***N*-(2,3-dihydroxypropyl)cyclohexanecarboxamide.** 3-Aminopropane-1,2-diol (2.0 g, 22 mmol) and triethylamine (3.26 mL, 0.024 mol) were dissolved in 15 mL of DMF and cooled to 0 °C under N₂ atmosphere. In a separate flask, cyclohexanecarbonyl chloride (3.22 g, 22 mmol) was solubilized in 10 mL of DMF and added dropwise to the solution of 3-aminopropane-1,2-diol and triethylamine. The reaction was kept at 0 °C for 1 hour and let to warm up to room temperature for 18 additional hours. The reaction mixture was added to 300 mL brine and extracted with 5 × 50 mL of 1-butanol. The organic fractions were combined, washed with 150 mL of 0.5 M NaOH_{(aq)}, 150 mL 0.5 M of HCl_{(aq)} and 150 mL brine, and then dried over anhydrous MgSO₄. The solvent was removed under vacuum and the solids were washed with diethyl ether, yielding a white powder (1.72 g, yield = 39 %).

¹H NMR (400 MHz, DMSO-d₆, 25 °C, TMS) δ 7.71 (t, *J* = 5.8 Hz, 1H), 4.78 (s, 1H), 4.55 (d, *J* = 5.6 Hz, 1H), 3.44 (t, *J* = 5.7 Hz, 1H), 3.25 (s, 2H), 3.14 (ddd, *J* = 13.4, 6.0, 5.2 Hz, 1H), 2.96 (ddd, *J* = 13.4, 6.4, 5.5 Hz, 1H), 2.12 (ddd, J = 11.4, 8.1, 3.3 Hz, 1H), 1.78 - 1.52 (m, 5H), 1.41 - 1.02 (m, 5H). ¹³C NMR (101 MHz, DMSO-d₆, 25 °C) δ 175.76, 70.59, 63.61, 43.89, 41.94, 29.32, 25.49, 25.28. Splitting of the peaks of cyclohexyl groups in ¹³C NMR was observed.

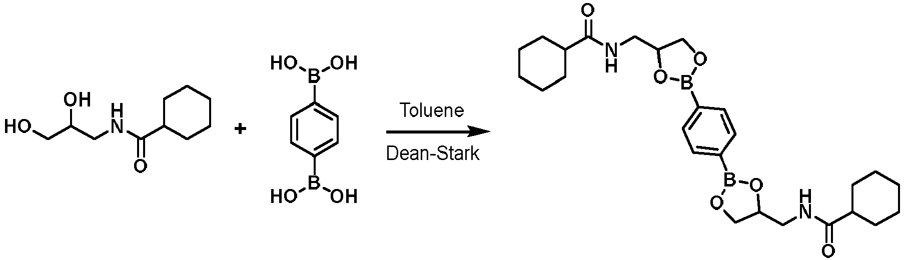

**Crosslinking agent 1.** *N*-(2,3-Dihydroxypropyl) cyclohexanecarboxamide (1.76 g, 8.78 mmol), benzene-1,4-diboronic acid (0.728 g, 4.39 mmol), water (5 mL, 0.28 mol) and ethanol (5 mL, 0.109 mol) were added to a round-bottom flask with 90 mL toluene. The flask was connected to a Dean-Stark apparatus and the mixture was heated to reflux. The reaction was cooled after the purging liquid was clear for 3 purges (45 mL). Solvent was removed under reduced pressure and the product was crystallized from acetonitrile/DMF after hot filtration yielding **crosslinking agent 1** as a white solid (1.49 g, yield = 60%).

¹H NMR (400 MHz, DMSO-d₆, 25 °C, TMS) δ 7.93 (t, *J* = 5.9 Hz, 2H), 7.73 (s, 4H), 4.68 - 4.56 (m, 2H), 4.33 (t, *J* = 8.6 Hz, 2H), 4.02 (dd, *J* = 9.1, 6.5 Hz, 2H), 3.41 - 3.19 (m, 4H), 2.12 (tt, *J* = 11.3, 3.4 Hz, 2H), 1.78 - 1.50 (m, 10H), 1.41 - 0.99 (m, 10H). ¹³C NMR (101 MHz, DMSO-d₆, 25 °C) δ 175.89, 133.81, 75.97, 68.23, 43.79, 42.01, 29.09, 25.44, 25.21. Carbon adjacent to the Boron could not be observed. Splitting of the peaks of cyclohexyl groups in ¹³C NMR was observed. ESI-MS: m/z calcd. for C₂₆H₃₈B₂N₂O₆H⁺: 497.2989 ; found: 497.2354.

### Structure of the additive 1:

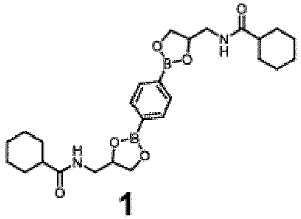

### Example2: Identification of the processing temperature and curing time for a given polymer matrix and additive

In this example, we used additive **1** obtained in example 1 and a polymer P with pending dioxaborolanes ; *M*ₙ = 104 kg/mol, 5.7 mol% of repeating unit carrying a pending dioxaborolane, 86.4 mol% of 2-ethylhexyl methacrylate; 7.9 mol% of styrene; *T*_{g} = 12 °C). Polymer P has the following formula:

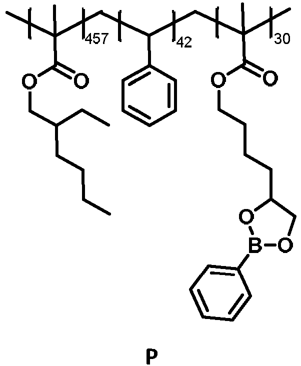

### i) DSC (Differential Scanning Calorimetry);

First, the melting point of additive A is determined by DSC. From DSC (Figure 1C), 1 melts at 262 °C with an enthalpy of melting of 192 J/g. This temperature is the limit at which additive can be processed, independently of the polymer matrix.

After blending **1** and **P** (1 wt% of **1)** by extrusion at 100 °C for 10 minutes, DSC of the resulting mixture was performed (Figure 1D). Since the weight loading is low, the signal is not very strong, but a melting peak is recognizable between 175 and 215 °C, with a peak at 193 °C, which is the reactive melting of **1** in **P.** It has to be noted that the dissociation temperature in the polymer is around 70 °C lower than for molecule **1** alone, reflecting the interactions (van der Waals interactions, hydrogen bonds, pi-pi interactions, covalent coordination bond for example) taking place between the additive and the polymer matrix.

### ii) VT-FTIR (Variable-Temperature Fourier-Transform Infrared Spectroscopy);

VT-FTIR, was performed by maintaining isotherms for 3 minutes every 5 °C (Figure **1A****).** FITR gives molecular information on the degree of aggregation of the additive **1,** by following the hydrogen bonded N-H stretch band of the amide bonds at 3292 cm⁻¹. Typically, this bands decreases and disappears when the number of hydrogen bonds declines, this is an indication of the melting and dissolution of **1** into the polymer matrix. The method that is employed to perform this experiment (3-minute isotherms), allows the system to be closer to equilibrium than the rheology experiments described below, thus giving information on the system in the minute timescale. Here, melting starts at 100 °C, with a small fraction of disassembled molecules. Melting continues gradually until 200 °C, when no more hydrogen-bonded amides can be observed. With this, a curing step can be designed where the crosslinking temperature T_{c} should be equal to or higher than (T_{dis(i)} + T_{dis(f)})/2, which is 150 °C for this system. Accordingly, a curing step has been designed to be performed at 220 °C for 10 minutes. Crosslinking should be performed at a temperature and for a duration for which the polymer will not degrade. This information is known to those skilled in the art.

### iii) Rheology.

To evidence and quantify the crosslinking reaction resulting from the melting of **1** in **P,** a temperature sweep experiment was performed in rheology on a mixture of **P** and **1,** at 1 wt% of **1** (Figure **1B****).** The sample was heated at 10 °C/min from 50 to 250 °C and the shear storage (*G*') and loss (*G*") moduli were measured at a frequency of 1 rad/s. From 50 to 160 °C, both moduli decrease with temperature, indicating a fluidification of the system, which is expected for a thermoplastic. From 160 °C, the storage modulus (G') increases from 500 Pa to 16000 Pa at 240 °C, when it reaches a plateau. This increase in storage and loss moduli reflects the crosslinking reaction taking place between polymer **P** and the melted additive **1.** From rheology and DSC, a maximum temperature for processing of **P** with **1** without crosslinking can be deduced. For this example, **1** at a 1 wt% loading in **P,** crosslinking starts at 160 °C in rheology (corroborated with melting at 175 °C from DSC, a less sensitive analysis).

The processing should preferably be conducted at least 30 °C below the temperature at which G' starts to increase during temperature sweep experiment performed at a frequency of 1 rad/s and a heating rate of 10 °C/min (Figure 1B), preferentially at least 40 °C below the temperature at which G' starts to increase during temperature sweep experiment performed at a frequency of 1 rad/s and a heating rate of 10 °C/min, even more preferentially at least 60 °C below the temperature at which G' starts to increase during temperature sweep experiment performed at a frequency of 1 Hz and a heating rate of 10 °C/min.

The experiments above - DSC, rheology, FTIR - allow to define the processing temperature and the curing conditions (temperature and duration) for a given additive in a given polymer matrix. In the present example, additive **1** at a loading of 1 wt% in **P,** we have to process the two components below or at 100 °C. We chose 100 °C for 10 minutes; and perform the curing step at a temperature Tc equal to or higher than (T_{dis(i)} + T_{dis(f)})/2, which is 150 °C for this system. Accordingly, we chose 220 °C for 10 minutes.

### Example 3: process of the invention with additive of the invention or with comparative additive

We implement the additive **1** and the polymer **P** disclosed in example 2.

We further use comparative additive **2** (counter example) of formula:

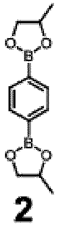

According to the process of the present invention, the crosslinking agent **1** is mixed with polymer **P** at a loading of 1 wt%, at a temperature Tₘᵢₓ of 100°C and the mix is extruded at a screw speed of 100 rpm (rotation per minute). The torque required to keep the screw speed rotation constant remains constant (Figure **2A** ; solid line). The torque required to rotate the screw is correlated to the viscosity of the melt.

In a counter example, the same experiment is carried out by using the additive **2** instead of **1 -** at the same molar loading, temperature and screw speed. The torque quickly increases and reaches a plateau that is more than double than the torque measured in the extrusion performed with 1 (Figure **2A** **;** dashed line). This is a clear indication that the mixture **P+2** starts crosslinking during the extrusion under these conditions, while no crosslinking happens during the extrusion of the mixture **P** + **1.**

Rheological analyses further show that the material processed with **2** is crosslinked after extrusion, (without the need for a curing step). Stress relaxation (Figure **2B****)** shows how long it takes for a material to relax stress at a constant deformation, and gives indications on the viscosity/fluidity of a material (*i.e*. the higher the viscosity, the longer is the relaxation time). The functional polymer **P** extruded at 100°C with 1 wt% of **1** completely relaxes stress after around 100 seconds (solid line), giving a zero-shear viscosity of *η₀* = 120000 Pa.s and a relaxation time of *τ* = 104 s. When the material obtained by extrusion of **P** and **1** at 100°C is cured by compression molding (10 minutes at 220°C), it no longer completely relaxes stress within 10000 s - around 5% residual stress after 10000 s-, which is common for a boronic ester based vitrimers, and constitutes a direct evidence of the transformation of the material into a vitrimer (dashed line). The material extruded with **2,** without any curing step, does not completely relax stress within 10000 s, displaying a residual stress of 14% after 10000 s (dotted line).

These two experiments show that the mixture polymer **P** + **1** is not crosslinked after extrusion at 100°C, while the mixture polymer **P** + **2** is already crosslinked after extrusion.

Significant stress relaxation of the cured material (Polymer **P** + 1 wt% of **1** extruded and then compression molded; Figure **2B****,** dashed line) at 100 °C, combined with presence of a rubbery plateau in DMA (Dynamic Mechanical Analysis) (Figure 3, black dotted line) is characteristic of a vitrimer.

To assess the recyclability of the vitrimer (cured material) obtained in that example, the vitrimer was tested mechanically (tensile testing) to rupture and then mechanically recycled. Mechanical recycling was performed by cutting and shredding the samples into small pieces and compression molding into the desired shape at 140°C and 1 ton-equivalent for 20 minutes. The resulting recycled material was subsequently characterized by DMA (Figure **3****,** grey dashed line) and tensile testing again and compared to the vitrimer (Table 1).

**Table 1. Uniaxial tensile testing of the vitrimer obtained by extrusion and compression molding (10 minutes at 220 °C, black dotted line) of polymer P with 1 wt% of 1 (P + 1 - Cured), and of the latter material after recycling (P + 1 - Recycled, grey dashed line).**

| **Sample** | **Strain at Break (%)** | **Stress at Break (MPa)** | **Young's Modulus (MPa)** |
|---|---|---|---|
| **P + 1** - Cured | 793 ± 66 | 0.82 ± 0.05 | 1.2 ± 0.1 |
| **P + 1** - Recycled | 793 ± 99 | 1.1 ± 0.1 | 1.8 ± 0.2 |

## Claims

1. A process for preparing a crosslinked polymer composition containing exchangeable pending links and exchangeable crosslinks, by boronic ester metathesis reactions, comprising the steps of:
(a) heating, to a temperature Tₘᵢₓ, a mix M comprising:
- a thermoplastic polymer, the thermoplastic polymer comprising pending boronic ester groups independently selected in the group consisting of dioxaborolane and dioxaborinane of the following formula EB-1 and EB-2, 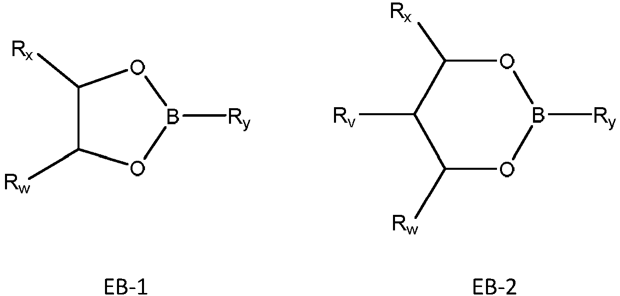 in which
Rx, Rv and Rw are identical or different and each represent a hydrogen atom or a group comprising carbon or form together, as a pair, an aliphatic or an aromatic ring,
Ry is a group comprising carbon, Ry being linked to the boron atom of the dioxaborolane or dioxaborinane ring by a covalent bond through a carbon atom;
- Ry being further linked to the polymer directly by a covalent bond or through a functional group G covalently linked to the polymer; or
- the substituent selected from Rx, Rw, Rv, {Rx, Rw} or {Rx, Rv} being linked to the polymer by a covalent bond or through a functional group G covalently linked to the polymer,
- molecules of an additive A able to react with the pending boronic ester groups of the thermoplastic polymer to form a crosslinked polymer composition containing pending links and crosslinks that are exchangeable by boronic ester metathesis reaction and able to form intermolecular non-covalent interactions with other molecules of additive A and/or with the thermoplastic polymer so that at a temperature Tₘᵢₓ the molecules of additive A are associated together and/or with the thermoplastic polymer by non-covalent interactions, each molecule of additive A independently comprising:
• two boronic ester functions able to react with the pending boronic ester groups of the thermoplastic polymer, and
• two or more functions F, identical or different, selected in the group consisting of an amide function of formula -NH-C(O)-, a urea function of formula -NH-C(O)-NH-, and a carbamate function of formula -O-C(O)-NH-,
wherein Tₘᵢₓ is higher than the glass transition temperature or the melting temperature of the thermoplastic polymer used in step (a) and equal to or lower than the initial temperature of dissociation T_{dis(i)} of the crosslinking agent (additive A) in the mix of step (a),
(b) recovering a composition comprising the polymer of step (a), which is not crosslinked, and the additive A, and,
(c) curing the non-crosslinked composition of step (b) at a temperature T_{c} to provide the crosslinked polymer composition,
wherein T_{c} satisfies the following :
T_{c} ≥ (T_{dis(i)} + T_{dis(f)})/2, where T_{dis(i)} is the initial temperature of dissociation in step (a) and T_{dis(f)} is the final temperature of dissociation of the additive A in the mix of step (c),
the initial temperature of dissociation T_{dis(i)} is the temperature at which the intermolecular non-covalent interactions formed by the molecules of additive A in the mix of step (a) start to break, and
the final temperature of dissociation T_{dis(f)} is the temperature at which the intermolecular non-covalent interactions formed by the molecules of additive A in the mix of step (c) are completely broken;
wherein the dissociation temperature and the glass transition temperature are measured according to the method in the description.

2. The process of claim 1, wherein each molecule of additive A comprises two identical boronic ester functions.

3. The process of claim 1 or 2, wherein the molecules of additive A are identical and are of formula (IA) : 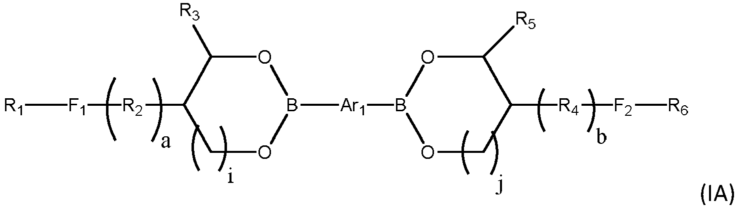 in which
Ar₁ is an aromatic group; F₁ and F₂, identical or different, are selected in the group consisting of -NH-C(O)-, -C(O)-NH-, -NH-C(O)-NH-, -O-C(O)-NH- and -NH-C(O)-O-;
a, b, i and j, identical or different, are natural integers equal to 0 or 1;
when a is 1:
- R₂ is a C₁-C₄ alkanediyl or a C₁-C₄ alkenediyl, said alkanediyl or alkendiyl being optionally substituted with one or more halogen(s), R₃ is H or
- R₂ further forms with R₃ an aromatic group provided that i=0, said aromatic group being optionally substituted by one or more halogen(s);
when a is 0: the radical F₁ is directly linked to the carbon atom of the ester boronic and R₃ is H;
when b is 1:
- R₄ is an C₁-C₄ alkanediyl or a C₁-C₄ alkenediyl, said alkanediyl or alkendiyl being optionally substituted with one or more halogen(s), R₅ is H or
- R₄ further forms with R₅ an aromatic group provided that j=0, said aromatic group being optionally substituted by one or more halogen(s);
when b is 0: the radical F₂ is directly linked to the carbon atom of the ester boronic and R₅ is H;
R₁ and R₆, identical or different, are each a group comprising carbon.

4. The process of claim 1 or 2, wherein the molecules of additive A are identical and are of formula (IB) : 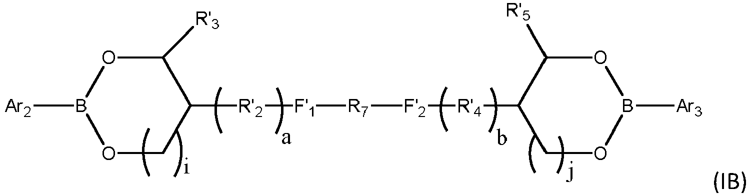 in which
Ar₂ and Ar₃, identical or different, are an aromatic group;
F'₁ and F'₂, identical or different, are selected in the group consisting of -NH-C(O)-, -C(O)-NH-, - NH-C(O)-NH-, -O-C(O)-NH- and -NH-C(O)-O-;
a, b, i and j, identical or different, are natural integers equal to 0 or 1;
when a is 1:
- R'₂ is a C₁-C₄ alkanediyl or a C₁-C₄ alkenediyl, said alkanediyl or alkendiyl being optionally substituted with one or more halogen(s), R'₃ is H or
- R'₂ further forms with R'₃ an aromatic group provided that i=0, said aromatic group being optionally substituted by one or more halogen(s);
when a is 0: the radical F'₁ is directly linked to the carbon atom of the ester boronic and R'₃ is H;
when b is 1:
- R'₄ is a C₁-C₄ alkanediyl or a C₁-C₄ alkenediyl, said alkanediyl or alkendiyl being optionally substituted with one or more halogen(s), R's is H, or
- R'₄ further forms with R's an aromatic group provided that j=0, said aromatic group being optionally substituted by one or more halogen(s);
when b is 0: the radical F'₂ is directly linked to the carbon atom of the ester boronic and R's is H;
R₇ is a group comprising carbon.

5. The process of any of claims 1 to 4, wherein step (b) includes a shaping of the non-crosslinked polymer composition, for example by extrusion, injection, compression, molding or thermoforming.

6. The process of any one of claims 1 to 5, wherein steps (a) and (b) are achieved simultaneously by extrusion.

7. The process of any one of claims 1 to 6, wherein step (c) is carried out for a time ranging from 1 min to 1 hour, preferably from 2 min to 30 min, even more preferably from 5 min to 20 min.

8. The process of any one of claims 1 to 7, wherein the mix of step (a) comprises from 0.05 to 10 wt%, preferably from 0.1 to 3.5 wt%, more preferably from 0.5 to 1.5 wt% of the additive A in relation to the weight of the thermoplastic polymer, or to the blend thereof.

9. The process of any one of claims 1 to 8, wherein step (c) is performed by compression molding, injection molding and oven curing.

10. The process of any one of claims 1 to 9, wherein a thermoplastic polymer not carrying any pending boronic ester group is further added during step a).

11. The process of any one of claims 1 to 10, wherein step (a) comprises the following sub-steps:
(a1) providing a thermoplastic polymer comprising pending boronic ester groups, optionally a thermoplastic polymer not carrying any pending boronic ester group, or a blend thereof, as defined any one of claims 1 to 9,
(a2) providing an additive A as defined in any of claims 1 to 9,
(a3) mixing the thermoplastic polymer of step (a1) and the additive A of step (a2) at a processing temperature Tₘᵢₓ,
wherein Tₘᵢₓ is higher than the glass transition temperature or the melting temperature of the thermoplastic polymer provided in step (a1) and equal to or lower than the initial temperature of dissociation T_{dis(i)} of the crosslinking agent in the mix of step (a3).

## Patentansprüche

1. Verfahren zur Herstellung einer vernetzten Polymerzusammensetzung, die austauschbare Seitenbindungen und austauschbare Vernetzungen enthält, durch Boronsäureester-Metathese-Reaktionen, umfassend die folgenden Schritte:
(a) Erwärmen, auf eine Temperatur Tₘᵢₓ, eines Gemischs M, das umfasst:
- ein thermoplastisches Polymer, wobei das thermoplastische Polymer Boronsäureester-Seitengruppen umfasst, die unabhängig ausgewählt werden aus der Gruppe, die besteht aus Dioxaborolan und Dioxaborinan mit den folgenden Formeln EB-1 und EB-2 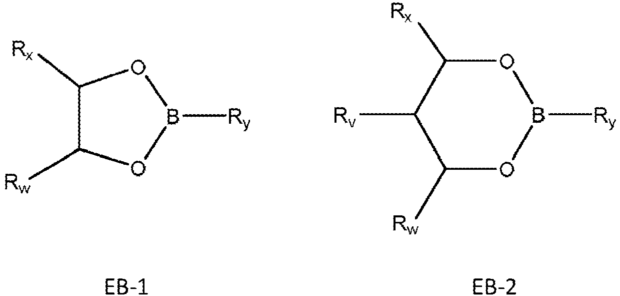 in denen
Rx, Rv und Rw identisch oder unterschiedlich sind und jeweils ein Wasserstoffatom oder eine Gruppe darstellen, die Kohlenstoff umfasst, oder zusammen als ein Paar einen aliphatischen oder aromatischen Ring bilden,
Ry eine Gruppe ist, die Kohlenstoff umfasst, wobei Ry mit dem Bor-Atom des Dioxaborolan- oder Dioxaborinan-Rings mittels einer kovalenten Bindung über ein Kohlenstoffatom verbunden ist;
- Ry ferner mittels einer kovalenten Bindung oder über eine funktionelle Gruppe G, die kovalent mit dem Polymer verbunden ist, direkt mit dem Polymer verbunden ist; oder
- der Substituent, der aus Rx, Rw, Rv, {Rx, Rw}, {Rx, Rv} ausgewählt wird, mittels einer kovalenten Bindung oder über eine funktionelle Gruppe G, die kovalent mit dem Polymer verbunden ist, mit dem Polymer verbunden ist,
- Moleküle eines Additivs A, das in der Lage ist, mit den Boronsäureester-Seitengruppen des thermoplastischen Polymers zu reagieren, um eine vernetzte Polymerzusammensetzung zu bilden, die seitliche Bindungen und Vernetzungen enthält, die durch Boronsäureester-Metathese-Reaktion austauschbar sind und in der Lage sind, nicht kovalente intermolekulare Wechselwirkungen mit anderen Molekülen des Additivs A und/oder mit dem thermoplastischen Polymer zu bilden, derart dass bei einer Temperatur Tₘᵢₓ die Moleküle des Additivs A zusammen und/oder mit dem thermoplastischen Polymer mittels nicht kovalenter Wechselwirkungen assoziiert werden, wobei jedes Molekül des Additivs A unabhängig umfasst:
• zwei Boronsäureester-Funktionen, die in der Lage sind, mit den Boronsäureester-Seitengruppen des thermoplastischen Polymers zu reagieren, und
• zwei oder mehr Funktionen F, die identisch oder unterschiedlich sind und ausgewählt werden aus der Gruppe, die besteht aus einer Amidfunktion mit der Formel -NH-C(O)-, einer Harnstofffunktion mit der Formel -NH-C(O)-NH- und einer Carbamat-Funktion mit der Formel -O-C(O)-NH-,
wobei Tₘᵢₓ höher als die Glasübergangstemperatur oder die Schmelztemperatur des in Schritt (a) verwendeten thermoplastischen Polymers und gleich oder niedriger als die Ausgangstemperatur der Dissoziation T_{dis(i)} des Vernetzungsmittels (Additiv A) im Gemisch von Schritt (a) ist,
(b) Rückgewinnen einer Zusammensetzung, die das Polymer von Schritt (a), das nicht vernetzt ist, und das Additiv A umfasst, und
(c) Aushärten der nicht vernetzten Zusammensetzung aus Schritt (b) bei einer Temperatur T_{c}, um die vernetzte Polymerzusammensetzung bereitzustellen,
wobei T_{c} Folgendes erfüllt: ${T}_{c} \geq \left({T}_{dis \left(i\right)}+{T}_{dis \left(f\right)}\right) / 2 ,$
wo T_{dis(i)} die Ausgangstemperatur der Dissoziation in Schritt (a) ist und T_{dis(f)} die Endtemperatur der Dissoziation des Additivs A im Gemisch von Schritt (c) ist,
die Ausgangstemperatur der Dissoziation T_{dis(i)} die Temperatur ist, bei der die nicht kovalenten intermolekularen Wechselwirkungen, die von den Molekülen des Additivs A im Gemisch von Schritt (a) gebildet werden, beginnen, aufzubrechen, und
die Endtemperatur der Dissoziation T_{dis(f)} die Temperatur ist, bei der die nicht kovalenten intermolekularen Wechselwirkungen, die von den Molekülen des Additivs A in dem Gemisch von Schritt (c) gebildet werden, vollständig aufgebrochen sind;
wobei die Dissoziationstemperatur und die Glasübergangstemperatur gemäß dem Verfahren in der Beschreibung gemessen werden.

2. Verfahren nach Anspruch 1, wobei jedes Molekül des Additivs A zwei identische Boronsäureester-Funktionen umfasst.

3. Verfahren nach Anspruch 1 oder 2, wobei die Moleküle des Additivs A identisch sind und die Formel (IA) aufweisen: 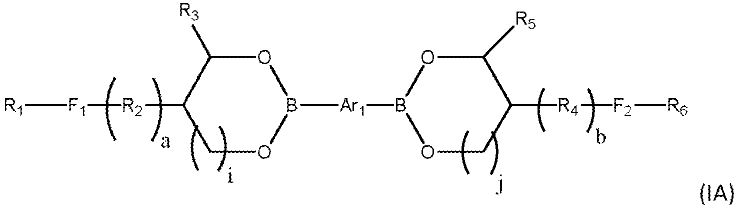 in der
Ar₁ eine aromatische Gruppe ist; F₁ und F₂ identisch oder unterschiedlich sind und aus der Gruppe ausgewählt werden, die besteht aus -NH-C(O)-, -C(O)-NH-, -NH-C(O)-NH-, -O-C(O)-NH und -NH-C(O)-O-;
a, b, i und j identisch oder unterschiedlich sind und natürliche ganze Zahlen gleich 0 oder 1 sind;
wenn a gleich 1 ist:
- ist R₂ ein C₁-C₄-Alkandiyl oder ein C₁-C₄-Alkendiyl, wobei das Alkandiyl oder Alkendiyl wahlweise mit einem oder mehreren Halogenen substituiert ist, R₃ H ist oder
- R₂ ferner mit R₃ eine aromatische Gruppe bildet, vorausgesetzt i=0, wobei die aromatische Gruppe wahlweise mit einem oder mehreren Halogenen substituiert ist;
wenn a gleich 0 ist: ist das Radikal F₁ direkt mit dem Kohlenstoffatom des Boronsäureesters verbunden und R₃ ist H;
wenn b gleich 1 ist:
- ist R₄ ein C₁-C₄-Alkandiyl oder ein C₁-C₄-Alkendiyl, wobei das Alkandiyl oder Alkendiyl wahlweise mit einem oder mehreren Halogenen substituiert ist, R₅ H ist oder,
- R₄ ferner mit R₅ eine aromatische Gruppe bildet, vorausgesetzt j=0, wobei die aromatische Gruppe wahlweise mit einem oder mehreren Halogenen substituiert ist;
wenn b gleich 0 ist: ist das Radikal F₂ direkt mit dem Kohlenstoffatom des Boronsäureesters verbunden und R₅ ist H;
sind R₁ und R₆ identisch oder unterschiedlich und jeweils eine Gruppe, die Kohlenstoff umfasst.

4. Verfahren nach Anspruch 1 oder 2, wobei die Moleküle des Additivs A identisch sind und die Formel (IB) aufweisen: 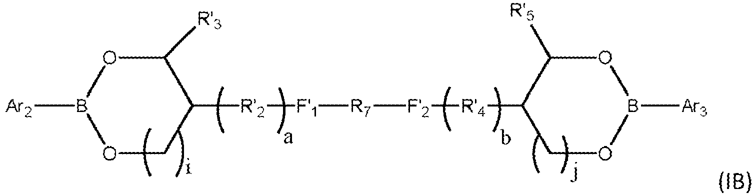 in der
Ar₂ und Ar₃ identisch oder unterschiedlich sind und eine aromatische Gruppe sind;
F'₁ und F'₂ identisch oder unterschiedlich sind und aus der Gruppe ausgewählt werden, die besteht aus -NH-C(O)-, -C(O)-NH-, -NH-C(O)-NH-, -O-C(O)-NH- und -NH-C(O)-O;
a, b, i und j identisch oder unterschiedlich sind und ganze Zahlen gleich 0 oder 1 sind;
wenn a gleich 1 ist:
- ist R'₂ ein C₁-C₄-Alkandiyl oder ein C₁-C₄-Alkendiyl, wobei das Alkandiyl oder Alkendiyl wahlweise mit einem oder mehreren Halogenen substituiert ist, R'₃ H ist oder
- R'₂ ferner mit R'₃ eine aromatische Gruppe bildet, vorausgesetzt i=0, wobei die aromatische Gruppe wahlweise mit einem oder mehreren Halogenen substituiert ist;
wenn a gleich 0 ist: ist das Radikal F'₁ direkt mit dem Kohlenstoffatom des Boronsäureesters verbunden und R'₃ ist H;
wenn b gleich 1 ist:
- ist R'₄ ein C₁-C₄-Alkandiyl oder ein C₁-C₄-Alkendiyl, wobei das Alkandiyl oder Alkendiyl wahlweise mit einem oder mehrere Halogenen substituiert ist, R'₅ H ist oder
- bildet R'₄ ferner mit R'₅ eine aromatische Gruppe, vorausgesetzt j=0, wobei die aromatische Gruppe wahlweise mit einem oder mehreren Halogenen substituiert ist;
wenn b gleich 0 ist: ist das Radikal F'₂ direkt mit dem Kohlenstoffatom des Boronsäureesters verbunden und R'₅ ist H;
ist R₇ eine Gruppe, die Kohlenstoff umfasst.

5. Verfahren nach einem der Ansprüche 1 bis 4, wobei der Schritt (b) ein Formen der nicht vernetzten Polymerzusammensetzung, zum Beispiel durch Extrusion, Spritzguss, Formpressen, Formen oder Thermoformen umfasst.

6. Verfahren nach einem der Ansprüche 1 bis 5, wobei die Schritte (a) und (b) gleichzeitig durch Extrusion bewerkstelligt werden.

7. Verfahren nach einem der Ansprüche 1 bis 6, wobei der Schritt (c) während eines Zeitraums von 1 Minute bis 1 Stunde, vorzugsweise von 2 Minuten bis 30 Minuten, sogar bevorzugter von 5 Minuten bis 20 Minuten, durchgeführt wird.

8. Verfahren nach einem der Ansprüche 1 bis 7, wobei das Gemisch aus Schritt (a) von 0,05 bis 10 Gew.-%, vorzugsweise von 0,1 bis 3,5 Gew.-%, bevorzugter von 0,5 bis 1,5 Gew.-%, des Additivs A, bezogen auf das Gewicht des thermoplastischen Polymers oder der Mischung daraus, umfasst.

9. Verfahren nach einem der Ansprüche 1 bis 8, wobei der Schritt (c) durch Pressformen, Spritzguss und Ofenhärtung durchgeführt wird.

10. Verfahren nach einem der Ansprüche 1 bis 9, wobei ein thermoplastisches Polymer, das keine Boronsäureester-Seitengruppe trägt, ferner während des Schritts a) beigemengt wird.

11. Verfahren nach einem der Ansprüche 1 bis 10, wobei der Schritt (a) die folgenden Teilschritte umfasst:
(a1) Bereitstellen eines thermoplastischen Polymers, das Boronsäureester-Seitengruppen umfasst, wahlweise eines thermoplastischen Polymers, das keine Boronsäureesterseitengruppe trägt, oder einer Mischung daraus, nach einem der Ansprüche 1 bis 9,
(a2) Bereitstellen eines Additivs A nach einem der Ansprüche 1 bis 9,
(a3) Mischen des thermoplastischen Polymers aus Schritt (a1) und des Additivs A aus Schritt (a2) bei einer Verarbeitungstemperatur Tₘᵢₓ,
wobei Tₘᵢₓ höher als die Glasübergangstemperatur oder die Schmelztemperatur des in Schritt (a1) bereitgestellten thermoplastischen Polymers und gleich oder niedriger als die Ausgangstemperatur der Dissoziation T_{dis(i)} des Vernetzungsmittels in dem Gemisch aus Schritt (a3) ist.

## Revendications

1. Procédé de préparation d'une composition de polymère réticulé contenant des liaisons pendantes échangeables et des liaisons de réticulation échangeables, par des réactions de métathèse d'esters boroniques, comprenant les étapes suivantes :
(a) le chauffage, à une température Tₘᵢₓ, d'un mélange M comprenant :
- un polymère thermoplastique, ledit polymère thermoplastique comprenant des groupes esters boroniques pendants choisis indépendamment dans le groupe constitué par les dioxaborolanes et les dioxaborinanes de formules EB-1 et EB-2 suivantes : 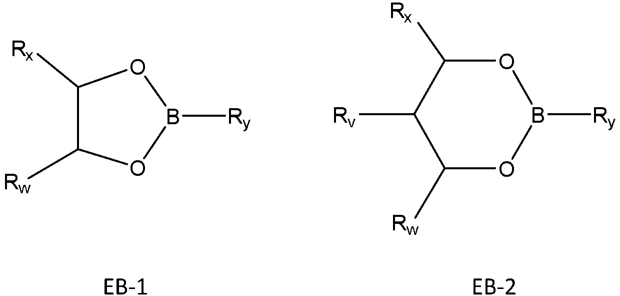 dans lesquelles
Rx, Rv et Rw sont identiques ou différents et représentent chacun un atome d'hydrogène ou un groupe comprenant du carbone, ou forment ensemble, en tant que paire, un cycle aliphatique ou aromatique,
Ry est un groupe comprenant du carbone, Ry étant lié à l'atome de bore du cycle dioxaborolane ou dioxaborinane par une liaison covalente via un atome de carbone ;
- Ry étant en outre lié au polymère directement par une liaison covalente ou par l'intermédiaire d'un groupe fonctionnel G lié de manière covalente au polymère ; ou
- le substituant choisi parmi Rx, Rw, Rv, {Rx, Rw} ou {Rx, Rv} étant lié au polymère par une liaison covalente ou par l'intermédiaire d'un groupe fonctionnel G lié de manière covalente au polymère,
- des molécules d'un additif A capables de réagir avec les groupes esters boroniques pendants du polymère thermoplastique pour former une composition de polymère réticulé contenant des liaisons pendantes et des liaisons de réticulation qui sont échangeables par une réaction de métathèse d'esters boroniques et capables de former des interactions intermoléculaires non covalentes avec d'autres molécules de l'additif A et/ou avec le polymère thermoplastique, de sorte qu'à une température T_{mix,} les molécules de l'additif A soient associées entre elles et/ou avec le polymère thermoplastique par des interactions non covalentes, chaque molécule de l'additif A comprenant indépendamment :
• deux fonctions ester boronique capables de réagir avec les groupes ester boronique pendants du polymère thermoplastique, et
• deux fonctions F ou plus, identiques ou différentes, choisies parmi le groupe constitué d'une fonction amide de formule -NH-C(O)-, d'une fonction urée de formule -NH-C(O)-NH- et d'une fonction carbamate de formule -O-C(O)-NH-,
où Tₘᵢₓ est supérieure à la température de transition vitreuse ou à la température de fusion du polymère thermoplastique utilisé à l'étape (a) et égale ou inférieure à la température initiale de dissociation T_{dis(i)} de l'agent de réticulation (additif A) dans le mélange de l'étape (a),
(b) récupérer une composition comprenant le polymère de l'étape (a), qui n'est pas réticulé, et l'additif A, et,
(c) durcir la composition non réticulée de l'étape (b) à une température T_{c} afin d'obtenir la composition de polymère réticulé,
où T_{c} satisfait à la relation suivante : ${T}_{c} \geq \left({T}_{dis \left(i\right)}+{T}_{dis \left(f\right)}\right) / 2 ,$ où T_{dis(i)} est la température initiale de dissociation à l'étape (a) et T_{dis(f)} est la température finale de dissociation de l'additif A dans le mélange de l'étape (c),
la température initiale de dissociation T_{dis(i)} est la température à laquelle les interactions intermoléculaires non covalentes formées par les molécules de l'additif A dans le mélange de l'étape (a) commencent à se rompre,
et
la température finale de dissociation T_{dis(f)} est la température à laquelle les interactions intermoléculaires non covalentes formées par les molécules de l'additif A dans le mélange de l'étape (c) sont complètement rompues ; dans lequel la température de dissociation et la température de transition vitreuse sont mesurées selon la méthode décrite dans la description.

2. Procédé selon la revendication 1, dans lequel chaque molécule d'additif A comprend deux fonctions ester boronique identiques.

3. Procédé selon la revendication 1 ou 2, dans lequel les molécules de l'additif A sont identiques et répondent à la formule (IA) : 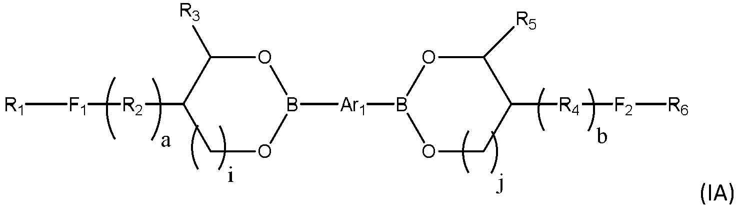 dans laquelle
Ar₁ est un groupe aromatique ; F₁ et F₂, identiques ou différents, sont choisis dans le groupe constitué par -NH-C(O)-, -C(O)-NH-, -NH-C(O)-NH-, -O-C(O)-NH- et -NH-C(O)-O- ;
a, b, i et j, identiques ou différents, sont des nombres entiers naturels égaux à 0 ou 1 ;
lorsque a est égal à 1 :
- R₂ est un groupe alcanediyle en C₁ -C₄ ou un groupe alcènediyle en C₁ -C₄, ledit groupe alcanediyle ou alcènediyle étant optionellement substitué par un ou plusieurs atomes d'halogène, R₃ est H ou
- R₂ forme en outre avec R₃ un groupe aromatique à condition que i = 0, ledit groupe aromatique étant optionellement substitué par un ou plusieurs atomes d'halogène ;
lorsque a est égal à 0 : le radical F₁ est directement lié à l'atome de carbone de l'ester boronique et R₃ est H ;
lorsque b est égal à 1 :
- R₄ est un groupe alcanediyle en C₁ -C₄ ou un groupe alcènediyle en C₁ -C₄, ledit groupe alcanediyle ou alcènediyle étant optionellement substitué par un ou plusieurs atomes d'halogène, R₅ est H ou
- R₄ forme en outre avec R₅ un groupe aromatique à condition que j = 0, ledit groupe aromatique étant optionellement substitué par un ou plusieurs atomes d'halogène ;
lorsque b est égal à 0 : le radical F₂est directement lié à l'atome de carbone de l'ester boronique et R₅ est H ;
R₁ et R₆, identiques ou différents, représentent chacun un groupe comprenant du carbone.

4. Procédé selon la revendication 1 ou 2, dans lequel les molécules de l'additif A sont identiques et répondent à la formule (IB) : 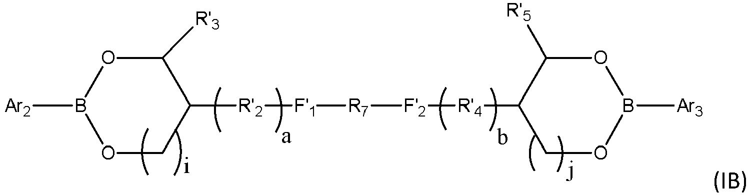 dans laquelle
Ar₂ et Ar₃, identiques ou différents, représentent un groupe aromatique ;
F'₁ et F'₂, identiques ou différents, sont choisis dans le groupe constitué par -NH-C(O)-, -C(O)-NH-, -NH-C(O)-NH-, -O-C(O)-NH- et -NH-C(O)-O- ;
a, b, i et j, identiques ou différents, sont des nombres entiers naturels égaux à 0 ou 1 ;
lorsque a est égal à 1 :
- R'₂ est un groupe alcanediyle en C₁ -C₄ ou un groupe alcènediyle en C₁ -C₄, ledit groupe alcanediyle ou alcènediyle étant optionellement substitué par un ou plusieurs atomes d'halogène, R'₃ est H ou
- R'₂ forme en outre avec R'₃ un groupe aromatique à condition que i = 0, ledit groupe aromatique étant optionellement substitué par un ou plusieurs atomes d'halogène ;
lorsque a est égal à 0 : le radical F'₁ est directement lié à l'atome de carbone de l'ester boronique et R'₃ est H ;
lorsque b est égal à 1 :
- R'₄ est un groupe alcanediyle en C₁ -C₄ ou un groupe alcènediyle en C₁ -C₄, ledit groupe alcanediyle ou alcènediyle étant optionellement substitué par un ou plusieurs atomes d'halogène, R'₅ est H, ou
- R'₄ forme en outre avec R'₅ un groupe aromatique à condition que j = 0, ledit groupe aromatique étant optionellement substitué par un ou plusieurs atomes d'halogène ;
lorsque b est égal à 0 : le radical F'₂est directement lié à l'atome de carbone de l'ester boronique et R'₅ représente H ;
R₇ est un groupe comprenant du carbone.

5. Procédé selon l'une quelconque des revendications 1 à 4, dans lequel l'étape (b) comprend un façonnage de la composition de polymère non réticulé, par exemple par extrusion, injection, compression, moulage ou thermoformage.

6. Procédé selon l'une quelconque des revendications 1 à 5, dans lequel les étapes (a) et (b) sont réalisées simultanément par extrusion.

7. Procédé selon l'une quelconque des revendications 1 à 6, dans lequel l'étape (c) est réalisée pendant une durée comprise entre 1 minute et 1 heure, de préférence entre 2 minutes et 30 minutes, et de manière encore plus préférable entre 5 minutes et 20 minutes.

8. Procédé selon l'une quelconque des revendications 1 à 7, dans lequel le mélange de l'étape (a) comprend de 0,05 à 10 % en poids, de préférence de 0,1 à 3,5 % en poids, plus préférablement de 0,5 à 1,5 % en poids de l'additif A par rapport au poids du polymère thermoplastique, ou de son mélange.

9. Procédé selon l'une quelconque des revendications 1 à 8, dans lequel l'étape (c) est réalisée par moulage par compression, moulage par injection et durcissement au four.

10. Procédé selon l'une quelconque des revendications 1 à 9, dans lequel un polymère thermoplastique ne comportant aucun groupe ester boronique libre est en outre ajouté au cours de l'étape (a).

11. Procédé selon l'une quelconque des revendications 1 à 10, dans lequel l'étape (a) comprend les sous-étapes suivantes :
(a1) fournir un polymère thermoplastique comprenant des groupes esters boroniques pendants, optionellement un polymère thermoplastique ne comportant aucun groupe ester boronique pendant, ou un mélange de ceux-ci, tel que défini dans l'une quelconque des revendications 1 à 9,
(a2) fournir un additif A tel que défini dans l'une quelconque des revendications 1 à 9,
(a3) mélanger le polymère thermoplastique de l'étape (a1) et l'additif A de l'étape (a2) à une température de traitement Tₘᵢₓ,
dans laquelle Tₘᵢₓ est supérieure à la température de transition vitreuse ou à la température de fusion du polymère thermoplastique fourni à l'étape (a1) et égale ou inférieure à la température initiale de dissociation T_{dis(i)} de l'agent de réticulation présent dans le mélange de l'étape (a3).
